(19) Europäisches Patentamt / European Patent Office / Office européen des brevets

(11) **EP 4 773 456 A1**

(12) **EUROPEAN PATENT APPLICATION**
published in accordance with Art. 153(4) EPC

(43) Date of publication:
**08.07.2026 Bulletin 2026/28**

(21) Application number: **24884807.9**

(22) Date of filing: **30.10.2024**

(51) International Patent Classification (IPC):
**H02J 3/00** (2026.01)    **H05B 6/06** (2006.01)

(52) Cooperative Patent Classification (CPC):
**H02J 3/00; H05B 6/06**

(86) International application number:
**PCT/CN2024/128465**

(87) International publication number:
**WO 2025/092807 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.10.2023   CN 202311440658**
**31.10.2023   CN 202311440643**

(71) Applicant: **Foshan Shunde Midea Electrical Heating Appliances Manufacturing Co., Ltd.**
**Foshan, Guangdong 528311 (CN)**

(72) Inventors:
• **ZENG, Lutian**
 **Foshan, Guangdong 528311 (CN)**
• **JIANG, Deyong**
 **Foshan, Guangdong 528311 (CN)**
• **RUAN, Shoule**
 **Foshan, Guangdong 528311 (CN)**
• **LEI, Jun**
 **Foshan, Guangdong 528311 (CN)**
• **MO, Yehui**
 **Foshan, Guangdong 528311 (CN)**
• **WANG, Yunfeng**
 **Foshan, Guangdong 528311 (CN)**

(74) Representative: **RGTH**
**Patentanwälte PartGmbB**
**Mönckebergstraße 11**
**20095 Hamburg (DE)**

(54) **ELECTROMAGNETIC HEATING CIRCUIT, CONTROL METHOD AND APPARATUS FOR ELECTRIC DEVICE, AND ELECTRIC DEVICE**

(57) Provided are an electromagnetic heating circuit, a control method and apparatus for an electric device, and an electric device. The circuit includes at least two resonance modules, at least two switch modules, an inverter module, a gating module, an oscillation drive module, a voltage processing module, and a control module. The switch module includes a fixed terminal, a movable terminal, a first position terminal, and a second position terminal. The at least two switch modules are in one-to-one correspondence with the at least two resonance modules. The fixed terminal of each switch module is connected to a corresponding resonance module. The inverter module is connected to the first position terminal. The gating module is connected to the second position terminal. The oscillation drive module is connected to the gating module. The voltage processing module is connected to the oscillation drive module. The control module is connected to the inverter module, the voltage processing module, the gating module, and the at least two switch modules. By means of the technical solution provided in embodiments of the present disclosure, when some of the resonance modules in the electromagnetic heating circuit are in a heating state, it can also be detected whether a pot is placed at positions corresponding to other resonance modules that are not in the heating state.

FIG. 19

**Description**

**CROSS-REFERENCE TO RELATED APPLICATIONS**

This application claims priority to Chinese Patent Application No. 202311440658.X, titled "ELECTROMAGNETIC HEATING CIRCUIT, CONTROL METHOD AND APPARATUS FOR ELECTRIC DEVICE, AND ELECTRIC DEVICE" and filed with China National Intellectual Property Administration on October 31, 2023, the entire disclosure of which is incorporated herein by reference.

This application claims priority to Chinese Patent Application No. 202311440643.3, titled "ELECTROMAGNETIC HEATING CIRCUIT, CONTROL METHOD AND APPARATUS FOR ELECTRIC DEVICE, AND ELECTRIC DEVICE" and filed with China National Intellectual Property Administration on October 31, 2023, the entire disclosure of which is incorporated herein by reference.

**FIELD**

Embodiments of the present disclosure relate to the field of electrical technologies, and more particularly, to an electromagnetic heating circuit, a control method and apparatus for an electric device, and an electric device.

**BACKGROUND**

An electromagnetic heating device (such as an induction cooker and an electromagnetic integrated stove) is a widely used household appliance, which is manufactured based on an electromagnetic induction principle.

The electromagnetic heating device typically controls heating coils to start heating after detecting that a pot covers the heating coils. A method for detecting the pot by the electromagnetic heating device is specifically as follows: a control signal is transmitted by the electromagnetic heating device to connect each of the heating coils to an inverter module; the inverter module is controlled to output detection signals for one or more cycles; a signal characteristic of a current flowing through each of the heating coils is obtained to detect whether the pot covers each of the heating coils; in response to detecting that the pot covers each of the heating coils, each of the heating coils is maintained to be connected to the inverter module, and a drive pulse signal is transmitted to each of the heating coils through the inverter module to cause each of the heating coils to start heating; and in response to detecting that no pot covers each of the heating coils, each of the heating coils is disconnected from the inverter module.

However, for the above-mentioned heating coils disconnected from the inverter module, the electromagnetic heating device cannot detect whether the pot covers the heating coils. That is, when the electromagnetic heating device has a plurality of heating coils, and some of the heating coils have started heating, the electric device cannot perform pot detection on the heating coil that has not started heating.

**SUMMARY**

The present disclosure provides an electromagnetic heating circuit, a control method and apparatus for an electric device, and an electric device.

In a first aspect, embodiments of the present disclosure provide an electromagnetic heating circuit. The circuit comprises at least two resonance modules, at least two switch modules, an inverter module, a gating module, an oscillation drive module, a voltage processing module, and a control module. The at least two switch modules comprises a fixed terminal, a movable terminal, a first position terminal, and a second position terminal. The at least two switch modules are in one-to-one correspondence with the at least two resonance modules. The fixed terminal of each of the at least two switch modules is connected to a corresponding one of the at least two resonance modules. The inverter module is connected to the first position terminal. The gating module is connected to the second position terminal. The oscillation drive module is connected to the gating module and configured to transmit an oscillation drive signal to a target resonance module among the at least two resonance modules. The voltage processing module is connected to the oscillation drive module and configured to process an output voltage of the oscillation drive module to obtain a voltage processing result. The control module is connected to the inverter module, the voltage processing module, the gating module, and the at least two switch modules. The control module is configured to: determine the target resonance module, and control the gating module to selectively switch on a circuit loop between the target resonance module and the oscillation drive module; and obtain the voltage processing result output by the voltage processing module to detect whether a pot is placed at a target position corresponding to the target resonance module.

In a second aspect, embodiments of the present disclosure also provide an electromagnetic heating circuit. The circuit comprises at least two resonance modules, at least two switch modules, an inverter module, a gating module, an oscillation drive module, a comparison module, and a control module. The at least two switch modules comprises a fixed terminal, a movable terminal, a first position terminal, and a second position terminal. The at least two switch modules are in one-to-one correspondence with the at least two resonance modules. The fixed terminal of each of the at least two switch modules is connected to a corresponding one of the at least two resonance modules. The inverter module is connected to the first position terminal. The gating module is connected to the second position terminal. The oscillation drive module is connected to the gating module and configured to transmit an oscillation drive signal to a target resonance module among the at least two resonance modules. The comparison module is connected to the oscillation drive module and configured to compare an output voltage of the oscillation drive module with a predetermined voltage to obtain a comparison result. The control module is connected to the inverter module, the comparison module, the gating module, and the at least two switch modules. The control module is configured to: control a movable terminal of a first switch module among the at least two switch modules to be in contact with the second position terminal; determine the target resonance module among resonance modules connected to the first switch module, and control the gating module to selectively switch on a circuit loop between the target resonance module and the oscillation drive module; obtain the comparison result output by the comparison module; determine an oscillation parameter of the target resonance module based on the comparison result, in which the oscillation parameter of the target resonance module comprises an oscillation period and/or an oscillation frequency; and detect, based on the oscillation parameter of the target resonance module, whether a pot is placed at a target position corresponding to the target resonance module.

In a third aspect, embodiments of the present disclosure also provide a control method for an electric device. The method is applied in the electromagnetic heating circuit according to the second aspect. The method comprises: controlling the movable terminal of the first switch module among the at least two switch modules to be in contact with the second position terminal; determining the target resonance module among resonance modules connected to the first switch module, and controlling the gating module to selectively switch on the circuit loop between the target resonance module and the oscillation drive module, in which the oscillation drive module is configured to transmit the oscillation drive signal to the target resonance module; obtaining the comparison result output by the comparison module; determining the oscillation parameter of the target resonance module based on the comparison result, in which the oscillation parameter of the target resonance module comprises the oscillation period and/or the oscillation frequency; detecting, based on the oscillation parameter of the target resonance module, whether the pot is placed at the target position corresponding to the target resonance module.

In a fourth aspect, embodiments of the present disclosure also provide a control apparatus for an electric device. The apparatus is applied in the electromagnetic heating circuit according to the second aspect. The apparatus comprises a first control module, a second control module, a first result obtaining module, an oscillation parameter determination module, and a first pot detection module. The first control module is configured to control the movable terminal of the first switch module among the at least two switch modules to be in contact with the second position terminal. The second control module is configured to determine the target resonance module among the resonance modules connected to the first switch module, and control the gating module to selectively switch on the circuit loop between the target resonance module and the oscillation drive module. The oscillation drive module is configured to transmit the oscillation drive signal to the target resonance module. The first result obtaining module is configured to obtain the comparison result output by the comparison module. The oscillation parameter determination module is configured to determine the oscillation parameter of the target resonance module based on the comparison result. The oscillation parameter of the target resonance module comprises the oscillation period and/or the oscillation frequency. The first pot detection module is configured to detect, based on the oscillation parameter of the target resonance module, whether the pot is placed at the target position corresponding to the target resonance module.

In a fifth aspect, embodiments of the present disclosure also provide an electric device. The electric device comprises the electromagnetic heating circuit according to the second aspect. The control module of the electromagnetic heating circuit comprises one or more processors, a memory, and one or more programs stored in the memory and configured to be executed by the one or more processors. The one or more programs are configured to perform the method according to the third aspect.

In a sixth aspect, embodiments of the present disclosure further provide an electromagnetic heating circuit. The circuit comprises at least two resonance modules, at least two switch modules, an inverter module, a gating module, an oscillation drive module, a voltage signal extraction module, and a control module. The at least two switch modules comprises a fixed terminal, a movable terminal, a first position terminal, and a second position terminal. The at least two switch modules are in one-to-one correspondence with the at least two resonance modules. The fixed terminal of each of the at least two switch modules is connected to a corresponding one of the at least two resonance modules. The inverter module is connected to the first position terminal. The gating module is connected to the second position terminal. The oscillation drive module is connected to the gating module and configured to transmit an oscillation drive signal to a target resonance module among the at least two resonance modules. The voltage signal extraction module is connected to the oscillation drive module and configured to output a peak voltage signal of the oscillation drive module based on amplitude of an output signal of the oscillation drive module. The control module is connected to the inverter module, the voltage signal extraction module, the gating module, and the at least two switch modules. The control module is configured to:

control a movable terminal of a first switch module among the at least two switch modules to be in contact with a second position terminal; determine the target resonance module among resonance modules connected to the first switch module, and control the gating module to selectively switch on a circuit loop between the target resonance module and the oscillation drive module; obtain an output result of the voltage signal extraction module, in which the output result is the peak voltage signal of the oscillation drive module; and detect, based on the peak voltage signal of the oscillation drive module, whether a pot is placed at a target position corresponding to the target resonance module.

In a seventh aspect, embodiments of the present disclosure also provide a control method for an electric device. The method is applied in the electromagnetic heating circuit according to the sixth aspect. The method comprises: controlling the movable terminal of the first switch module among the at least two switch modules to be in contact with the second position terminal; determining the target resonance module among resonance modules connected to the first switch module, and controlling the gating module to selectively switch on the circuit loop between the target resonance module and the oscillation drive module, in which the oscillation drive module is configured to transmit the oscillation drive signal to the target resonance module; obtaining the output result of the voltage signal extraction module, in which the output result is the peak voltage signal output by the oscillation drive module; and detecting, based on the peak voltage signal of the oscillation drive module, whether the pot is placed at the target position corresponding to the target resonance module.

In an eighth aspect, embodiments of the present disclosure also provide a control apparatus for an electric device. The apparatus is applied in the electromagnetic heating circuit according to the sixth aspect. The apparatus comprises a first control module, a second control module, a second result obtaining module, and a second pot detection module. The first control module is configured to control the movable terminal of the first switch module among the at least two switch modules to be in contact with the second position terminal. The second control module is configured to determine the target resonance module among resonance modules connected to the first switch module, and control the gating module to selectively switch on the circuit loop between the target resonance module and the oscillation drive module. The oscillation drive module is configured to transmit the oscillation drive signal to the target resonance module. The second result obtaining module is configured to obtain the output result of the voltage signal extraction module. The output result is the peak voltage signal of the oscillation drive module. The second pot detection module is configured to detect, based on the peak voltage signal of the oscillation drive module, whether the pot is placed at the target position corresponding to the target resonance module.

In a ninth aspect, embodiments of the present disclosure also provide an electric device. The electric device comprises the electromagnetic heating circuit according to the sixth aspect. The control module of the electromagnetic heating circuit comprises one or more processors, a memory, and one or more programs stored in the memory and configured to be executed by the one or more processors. The one or more programs are configured to perform the method according to the seventh aspect.

In a tenth aspect, embodiments of the present disclosure provide a computer-readable storage medium. The computer-readable storage medium has program code stored therein. The program code, when invoked by a processor, performs the method according to the third aspect or the seventh aspect.

In an eleventh aspect, embodiments of the present disclosure provide a computer program product. The computer program product is configured to implement, when executed, the method according to the third aspect or the seventh aspect.

## BRIEF DESCRIPTION OF THE DRAWINGS

In order to clearly explain technical solutions of embodiments of the present disclosure, drawings used in description of the embodiments will be briefly described below. The drawings described below merely illustrate some embodiments of the present disclosure. Based on these drawings, other drawings can be obtained by those skilled in the art without creative effort.

FIG. 1 is a structural diagram of an electromagnetic heating circuit according to an embodiment of the present disclosure.

FIG. 2 is a circuit diagram of an electromagnetic heating circuit according to an embodiment of the present disclosure.

FIG. 3 is a graph of a relationship between inductance of a heating coil and a distance between the heating coil and a metallic pot according to an embodiment of the present disclosure.

FIG. 4 is a waveform diagram of an output voltage of an oscillation drive module and a waveform diagram of a comparison result output by a comparison module according to an embodiment of the present disclosure.

FIG. 5 is a schematic diagram of an electric device according to an embodiment of the present disclosure.

FIG. 6 is a flowchart of a control method for an electric device according to an embodiment of the present disclosure.

FIG. 7 is a flowchart of a control method for an electric device according to another embodiment of the present disclosure.

FIG. 8 is a block diagram of a control apparatus for an electric device according to an embodiment of the present disclosure.

FIG. 9 is a structural block diagram of an electric device according to an embodiment of the present disclosure.

FIG. 10 is a structural diagram of an electromagnetic heating circuit according to another embodiment of the present disclosure.

FIG. 11 is a circuit diagram of an electromagnetic heating circuit according to another embodiment of the present disclosure.

FIG. 12 is a graph of a relationship between equivalent resistance of a heating coil and a distance between the heating coil and a metallic pot according to another embodiment of the present disclosure.

FIG. 13 is a waveform diagram of an oscillation waveform output by an oscillation drive module and a schematic diagram of a peak voltage signal extracted by a voltage signal extraction module according to another embodiment of the present disclosure.

FIG. 14 is a schematic diagram of an electric device according to another embodiment of the present disclosure.

FIG. 15 is a flowchart of a control method for an electric device according to yet another embodiment of the present disclosure.

FIG. 16 is a flowchart of a control method for an electric device according to still yet another embodiment of the present disclosure.

FIG. 17 is a block diagram of a control apparatus for an electric device according to another embodiment of the present disclosure.

FIG. 18 is a structural block diagram of an electric device according to another embodiment of the present disclosure.

FIG. 19 is a structural diagram of an electromagnetic heating circuit according to yet another embodiment of the present disclosure.

FIG. 20 is a structural block diagram of a computer-readable storage medium according to an embodiment of the present disclosure.

## DETAILED DESCRIPTION OF THE EMBODIMENTS

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

In order to enable those skilled in the art to better understand solutions of the present disclosure, the technical solutions in the embodiments of the present disclosure will be clearly and completely described below with reference to the accompanying drawings in the embodiments of the present disclosure. Obviously, the embodiments described here are only part of the embodiments of the present disclosure and are not all embodiments of the present disclosure. Based on the embodiments of the present disclosure, other embodiments obtained by those skilled in the art without creative labor are within the scope of the present disclosure.

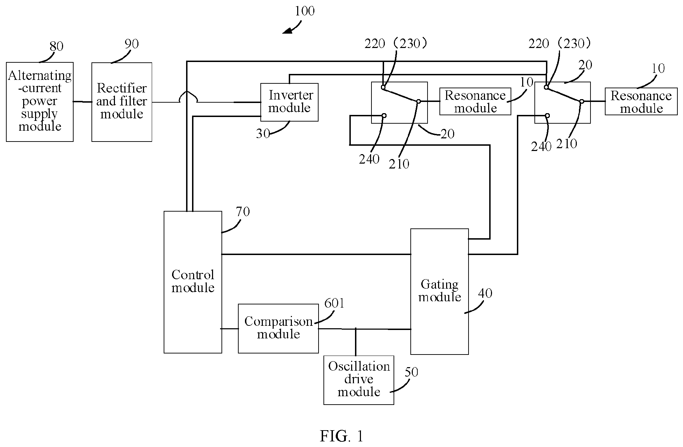

Referring to FIG. 1, FIG. 1 shows a structural diagram of an electromagnetic heating circuit 100 according to an embodiment of the present disclosure. The electromagnetic heating circuit 100 comprises at least two resonance modules 10, at least two switch modules 20, an inverter module 30, a gating module 40, an oscillation drive module 50, a comparison module 601, and a control module 70.

Each of the at least two resonance modules 10 is configured to generate highfrequency resonance to cause a heating coil in the resonance module 10 to generate an alternating magnetic field. When a ferrous container is placed at a position corresponding to the above-mentioned heating coil, the ferrous container cuts through magnetic field lines of the alternating magnetic field, thereby inducing an eddy current at a bottom of the container. The eddy current causes carriers at the bottom of the container to move at high speed and randomly. The carriers and atoms collide and rub against each other to generate thermal energy, thus providing a heating effect.

Each of the at least two switch modules 20 is configured to switch on or switch off a circuit loop between the resonance module 10 and the inverter module 30 and switch on or switch off a circuit loop between the resonance module 10 and the gating module 40. When the circuit loop between the resonance module 10 and the inverter module 30 is switched on, the circuit loop between the resonance module 10 and the gating module 40 is switched off. When the circuit loop between the resonance module 10 and the inverter module 30 is switched off, the circuit loop between the resonance module 10 and the gating module 40 is switched on.

Each of the at least two switch modules 20 comprises a fixed terminal 210, a movable terminal 220, a first position terminal 230, and a second position terminal 240. The at least two switch modules 20 are in one-to-one correspondence with the at least two resonance modules 10. The fixed terminal 210 of each of the at least two switch modules 20 is connected to a corresponding one of the at least two resonance modules 10. Therefore, the number of switch modules 20 and the number of resonance modules 10 are the same. The first position terminal 230 of the switch module 20 is connected to the inverter module 30. When the movable terminal 220 of the switch module 20 is in contact with the first position terminal 230 of the switch module 20, the circuit loop between the resonance module 10 connected to the switch module 20 and the inverter module 30 is switched on. The second position terminal of the switch module 20 is connected to the gating module 40. When the movable terminal 220 of the switch module 20 is in contact with the second position terminal 240 of the switch module 20, the circuit loop between the resonance module 10 connected to the switch module 20 and the gating module 40 is switched on.

The inverter module 30 is configured to convert a direct-current power into a highfrequency alternating current power, which is processed by a transformer and a filter circuit to output a stable alternating-current power. The gating module 40 is configured to selectively switch on a circuit loop between a certain resonance module 10 and the oscillation drive module 50. The oscillation drive module 50 is connected to the gating module 40 and configured to transmit an oscillation drive signal to the resonance module 10 selectively switched on by the gating module 40. The comparison module 601 is connected to the oscillation drive module 50 and configured to compare an output voltage of the oscillation drive module 50 with a predetermined voltage to obtain a comparison result.

The control module 70 is connected to the comparison module 601, the inverter module 30, the gating module 40, and the at least two switch modules 10. The control module 70 is configured to: control a movable terminal 220 of a first switch module among the at least two switch modules 20 to be in contact with a second position terminal 240 of the first switch module; determine the resonance module 10 connected to the first switch module as the target resonance module, and control the gating module to selectively switch on a circuit loop between the target resonance module and the oscillation drive module 50, in which the oscillation drive module 50 is configured to transmit an oscillation drive signal to the target resonance module; obtain a frequency detection result of the target resonance module output by the comparison module 601, in which the frequency detection result of the target resonance module indicates whether an oscillation frequency of oscillation sent by the target resonance module based on the oscillation drive signal is greater than a predetermined frequency; and determine, based on the frequency detection result of the target resonance module, whether a pot is placed at a target position corresponding to the target resonance module. Implementation details of pot detection performed by the control module 70 will be described in method embodiments below.

After the oscillation drive signal is transmitted by the oscillation drive module 50 to the target resonance module selectively switched on by the gating module 40, the resonance module forms a Colpitts oscillator circuit with the oscillation drive module 50 under the action of the oscillation drive signal. An oscillation frequency of the Colpitts oscillator circuit is determined by inductance of the heating coil in the target resonance module and capacitance of the entire circuit, and the inductance of the heating coil in the target resonance module changes depending on whether the pot is placed at the target position. Therefore, by detecting the oscillation frequency of the Colpitts oscillator circuit described above, it can be determined whether the pot is placed at the target position. The above-mentioned pot detection process does not involve the inverter module 30. In a case where a drive pulse signal is transmitted by the inverter module 30 to other resonance modules 10 other than the target resonance module, it can also be detected whether the pot is placed at the target position corresponding to the target resonance module. That is, for the electromagnetic heating circuit according to the embodiments of the present disclosure, even when some of the resonance modules 10 in the electromagnetic heating circuit 100 are in a heating state, it can also be detected whether the pot is placed at positions corresponding to other resonance modules 10 that are not in the heating state.

In some embodiments, the electromagnetic heating circuit 100 further comprises an alternating-current power supply module 80 and a rectifier and filter module 90. The alternating-current power supply module 80 is configured to provide an alternating-current power to the electromagnetic heating circuit 100. The rectifier and filter module 90 is configured to convert an alternating-current electrical signal output by the alternating-current power supply module 80 into a direct-current electrical signal, and filter out a highfrequency noise in the direct-current electrical signal to more stably output an electrical signal. The alternating-current power supply module 80 is connected to an input terminal of the rectifier and filter module 90, and an output terminal of the rectifier and filter module 90 is connected to the inverter module 30.

To sum up, for the electromagnetic heating circuit according to the embodiments of the present disclosure, the oscillation drive module, the gating module, and the comparison module are additionally provided in the electromagnetic heating circuit. The oscillation drive module can transmit the oscillation drive signal to the target resonance module selectively switched on by the gating module. The comparison module can convert an analog signal output by the oscillation drive module into a digital signal. The control module can determine an oscillation parameter (an oscillation period or an oscillation frequency) of the target resonance module based on the comparison result output by the comparison module. Then, the pot detection is performed based on the above-mentioned oscillation parameter. The resonance module forms the Colpitts oscillator circuit with the oscillation drive module under the action of the oscillation drive signal. An oscillation parameter of the Colpitts oscillator circuit is determined by the inductance of the heating coil in the target resonance module and the capacitance of the entire circuit, and the inductance of the heating coil in the target resonance module changes depending on whether the pot is placed at the target position. Therefore, by detecting the oscillation parameter of the Colpitts oscillator circuit described above, it can be determined whether the pot is placed at the target position. The above-mentioned pot detection process does not involve the inverter module. In a case where the drive pulse signal is transmitted by the inverter module to other resonance modules other than the target resonance module, it can also be detected whether the pot is placed at the target position corresponding to the target resonance module. That is, when some of the resonance modules in the electromagnetic heating circuit are in the heating state, it can also be detected whether the pot is placed at the positions corresponding to the other resonance modules that are not in the heating state.

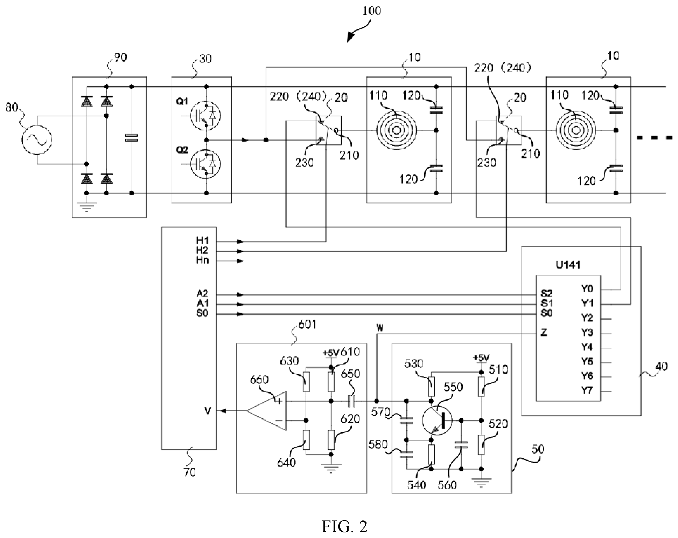

Each module involved in the electromagnetic heating circuit 100 provided in FIG. 1 will be described below with reference to FIG. 2. FIG. 2 shows a circuit diagram of an electromagnetic heating circuit 100 according to another embodiment of the present disclosure.

The resonance module 10 comprises a heating coil 11 and at least one resonant capacitor 12. The heating coil 11 is configured to generate an alternating magnetic field during resonance. When a ferrous container is placed at a position corresponding to the above-mentioned heating coil, the ferrous container cuts through magnetic field lines of the alternating magnetic field, thereby inducing an eddy current at a bottom of the container. The eddy current causes carriers at the bottom of the container to move at high speed and randomly. The carriers and atoms collide and rub against each other to generate thermal energy, thus providing a heating effect. The resonant capacitor 12 is configured to adjust a resonant frequency, which helps the resonance module 10 achieve strong feedback and enhance oscillation in the circuit. In an embodiment of FIG. 2, the resonance module 10 comprises a heating coil 110 and two resonant capacitors 120 (a first resonant capacitor C11 and a second resonant capacitor C12). The first resonant capacitor C11 and the second resonant capacitor C12 are connected in series to each other to form a series branch. An end of the series branch is connected to a first terminal of the inverter module 30, and another end of the series branch is connected to a second terminal of the inverter module 30. A first terminal of the heating coil 110 is connected to a common terminal of the first resonant capacitor C11 and the second resonant capacitor C12.

In the embodiment of FIG. 2, the switch module 20 is a single-pole double-throw switch. The fixed terminal 210 of the switch module 20 is connected to a second terminal of the heating coil 11. The first position terminal 230 of the switch module 20 is connected to the inverter module 30. The second position terminal 240 of the switch module 20 is connected to the gating module 40.

The inverter module 30 is configured to convert direct-current electrical energy into a fixed-frequency fixed-voltage alternating current or a variable-frequency variable-voltage alternating current. The inverter module 30 may be a half-bridge inverter circuit, a full-bridge inverter circuit, or a single-transistor inverter circuit, and the embodiments of the present disclosure do not limit its implementation form. In the embodiment of FIG. 2, the inverter module 30 is a half-bridge inverter circuit composed of a first insulated gate bipolar transistor (IGBT) Q1 and a second insulated gate bipolar transistor Q2. A collector of Q1 is connected to the rectifier filter module 80 and an end of the series branch (the series branch formed by the first resonant capacitor C11 and the second resonant capacitor C12 that are connected in series to each other). An emitter of Q2 is connected to a collector of Q2 and is connected to the rectifier filter module 80 and another end of the series branch. Each of gates of Q1 and Q2 is connected to the control module 70.

The gating switch 40 is a multi-to-one analog switch. The gating switch 40 comprises a common terminal, a plurality of selection terminals, and a control terminal. The common terminal of the gating switch 40 is connected to an output terminal of the oscillation drive module 50. The at least two selection terminals are in one-to-one correspondence with the at least two switch modules 20, and each of the at least two selection terminals is connected to the second position terminal 240 of a corresponding one of the at least two switch modules 20. The number of selection terminals may be greater than or equal to the number of switch modules 210. When the number of selection terminals is greater than the number of switch modules 20, some of the plurality of selection terminals are left unconnected. The control terminal is connected to the control module 70. The number of control terminals is determined based on the number of selection terminals. For example, if the number of selection terminals is 8, then the number of control terminals is 3. For another example, if the number of selection terminals is 16, then the number of control terminals is 4. In the embodiment of FIG. 2, the gating switch 40 is an eight-to-one analog switch, which comprises eight selection pins Y0 to Y7 (i.e., the selection terminals), three control pins S0, A1, and A2 (i.e., the control terminals), and a common pin z (i.e., the common terminal).

In the embodiment of FIG. 2, the oscillation drive module 50 comprises a fifth resistor 510, a sixth resistor 520, a seventh resistor 530, an eighth resistor 540, a transistor 550, a second capacitor 560, a third capacitor 570, and a fourth capacitor 580.

The fifth resistor 510 and the sixth resistor 520 are connected in series to each other to form a third series branch. An end of the third series branch is connected to a second predetermined power supply, and another end of the third series branch is grounded. A common terminal of the fifth resistor 510 and the sixth resistor 520 is connected to a base of the transistor 550. The fifth resistor 510 and the sixth resistor 520 are configured to provide voltage division for the base of the transistor 550. The second predetermined power supply may be a low voltage of +5 V. In this way, a voltage of the base of the transistor 550 is 2.5 V. A terminal of the seventh resistor 530 is connected to the second predetermined power supply, and another terminal of the seventh resistor 530 is connected to a collector of the transistor 550. The seventh resistor 530 is configured to provide voltage division for the collector of transistor 550. A terminal of the eighth resistor 540 is connected to an emitter of the transistor 550, and another terminal of the eighth resistor 540 is grounded. The eighth resistor 540 is configured to provide voltage division for the emitter of the transistor 550. A terminal of the second capacitor 560 is connected to the base of the transistor 550, and another terminal of the second capacitor 560 is grounded. The second capacitor 560 is configured to stabilize the voltage of the base of the transistor 550. The third capacitor 570 and the fourth capacitor 580 are connected in series to each other to form a fourth series branch. An end of the fourth series branch is connected to the collector of the transistor 550 and the comparison module 601, another end of the fourth series branch is grounded. A common terminal of the third capacitor 570 and the fourth capacitor 580 is connected to the emitter of the transistor 550. The third capacitor 570 and the fourth capacitor 580 constitute an oscillation circuit.

In the embodiments of the present disclosure, the transistor 550 is a Negative-Positive-Negative, NPN, transistor, and its conduction conditions comprise: the voltage of the base being higher than a voltage of the emitter, and a voltage of the collector being lower than the voltage of the base. In the embodiments of the present disclosure, when the transistor 550 is conducting, the third capacitor 570 and the fourth capacitor 580 are charged. In this case, the voltage of the emitter and the voltage of the collector increase, and therefore the conduction conditions of the transistor 550 are no longer satisfied. In this case, the transistor is cut off. The third capacitor 570 and the fourth capacitor 580 begin to discharge, and the voltage of the emitter and the voltage of the collector decrease until the conduction conditions of the transistor 550 are satisfied again. The oscillation circuit composed of the third capacitor 570 and the fourth capacitor 580 forms a Colpitts oscillator circuit with a heating coil in a resonance module that receives a drive oscillation signal. An oscillation frequency of the Colpitts oscillator circuit may be represented by the following frequency calculation formula:

$$f = \frac{1}{2\sqrt{LC}},$$

where:

L represents inductance of the heating coil in the resonance module that receives the drive oscillation signal; and

$C = \frac{C1 * C2}{C1 + C2}$, where C1 represents capacitance of the third capacitor 570, and C2 represents capacitance of the fourth capacitor 580.

According to the frequency calculation formula described above, it can be seen that the oscillation frequency of the Colpitts oscillator circuit described above can be determined based on the inductance of the heating coil in the resonance module that receives the drive oscillation signal, the capacitance of the third capacitor 570, and the capacitance of the fourth capacitor 580. The capacitance of the third capacitor 570 and the capacitance of the fourth capacitor 580 are fixed values, and the inductance of the heating coil in the resonance module that receives the drive oscillation signal needs to be determined based on whether the metallic pot covers the heating coil.

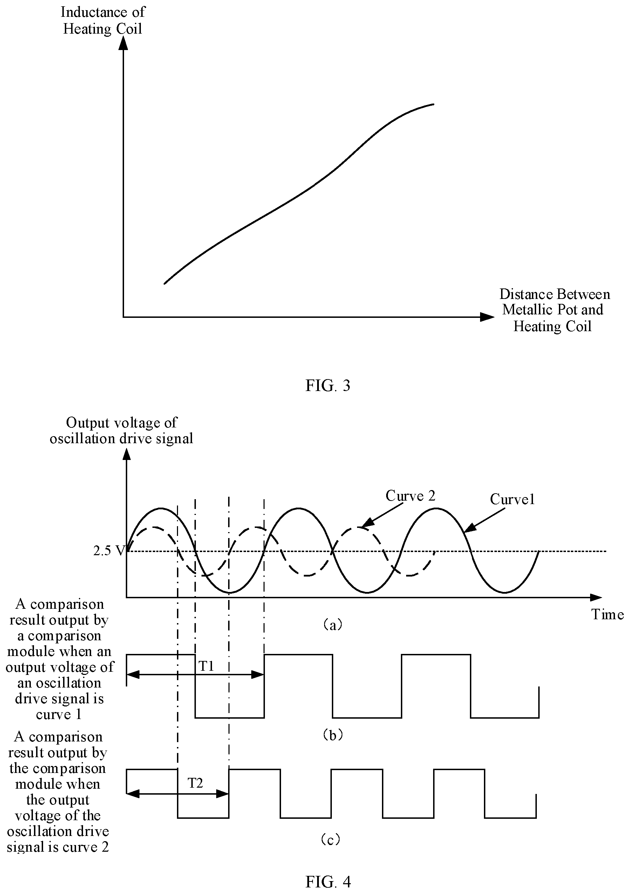

When the metallic pot covers the heating coil, equivalent inductance of the heating coil is related to a distance between the metallic pot and the heating coil. Referring to FIG. 3, FIG. 3 shows a graph of a relationship between inductance of a heating coil and a distance between a metallic pot and the heating coil according to an embodiment of the present disclosure. As the distance between the metallic pot and the heating coil increases, the equivalent inductance of the heating coil also gradually increases. As the distance between the metallic pot and the heating coil decreases, the equivalent inductance of the heating coil also decreases. According to the frequency calculation formula described above, it can be determined that the oscillation frequency of the Colpitts oscillator circuit increases as the distance between the metallic pot and the heating coil decreases. With reference to curve 1 in part (a) of FIG. 4, it shows an output waveform diagram of the oscillation drive module when the metallic pot covers the heating coil.

When no metallic pot covers the heating coil, the inductance of the heating coil is a fixed value. With reference to curve 2 in part (a) of FIG. 4, it shows an output waveform diagram of the oscillation drive module when no metallic pot covers the heating coil. According to a comparison of curve 1 and curve 2, it can be seen that the oscillation period of the above-mentioned Colpitts oscillator circuit when no metallic pot covers the heating coil is greater than the oscillation period of the above-mentioned Colpitts oscillator circuit when the metallic pot covers the heating coil. Therefore, the oscillation frequency of the above-mentioned Colpitts oscillator circuit when no metallic pot covers the heating coil is smaller than the oscillation frequency of the above-mentioned Colpitts oscillator circuit when the metallic pot covers the heating coil.

In the embodiment of FIG. 2, the comparison module 601 comprises a first capacitor 610, a first resistor 620, a second resistor 630, a third resistor 640, a fourth resistor 650, and a comparator 660.

A terminal of the first capacitor 610 is connected to the oscillation drive module 50. Specifically, the first capacitor 610 is connected to an output terminal of the oscillation drive module 50 and configured for alternating-current coupling of an output signal of the oscillation drive module 50.

The first resistor 620 and the second resistor 630 are connected in series to each other to form a first series branch. An end of the first series branch is connected to a first predetermined power supply, and another end of the first series branch is grounded. A common terminal of the first resistor 620 and the second resistor 630 is connected to another terminal of the first capacitor 610 and a positive input terminal of the comparator 660. The first resistor 620 and the second resistor 630 are configured for voltage division of the positive input terminal of the comparator 660. Optionally, resistance of the first resistor 620 and resistance of the second resistor 630 are equal, both being 10 kΩ. The first predetermined power supply may be a low voltage of +5 V, and a voltage of the positive input terminal of comparator 660 is thus 2.5 V.

The third resistor 640 and the fourth resistor 650 are connected in series to each other to form a second series branch. A terminal of the second series branch is connected to the first predetermined power supply, and a second end of the second series branch is grounded. A common terminal of the third resistor 640 and the fourth resistor 650 is connected to a negative input terminal of the comparator 660. The third resistor 640 and the fourth resistor 650 are configured for voltage division of the positive input terminal of the comparator 660. Optionally, resistance of the third resistor 640 and resistance of the fourth resistor 650 are equal, both being 10 kΩ. The first predetermined power supply is a low voltage of +5 V, and a voltage of the negative input terminal of the comparator 660 is also 2.5 V.

An output terminal of the comparator 660 is connected to the control module 70 and configured to output a comparison result to the control module 70. In this embodiment, a predetermined voltage is 2.5 V.

In the embodiments of the present disclosure, the voltages of the positive input terminal and the negative input terminal of the comparator 660 are both 2.5 V. Therefore, when a voltage of an output signal of the oscillation drive module 50 is greater than 2.5 V, the comparator 660 outputs a high level. When the voltage of the output signal of the oscillation drive module 50 is smaller than 2.5 V, the comparator 660 outputs a low level. With continued reference to FIG. 4, part (b) shows an output waveform diagram of the comparator 660 when no metallic pot covers the heating coil, and part (c) shows an output waveform diagram of the comparator 660 when the metallic pot covers the heating coil. According to a comparison between part (b) and part (c) in FIG. 4, it can be seen that a first interval duration is longer than a second interval duration. The first interval duration refers to an interval duration between two adjacent rising edges (i.e., a transition from the low level to the high level) output by the comparator 660 when no metallic pot covers the heating coil. The second interval duration refers to an interval duration between two adjacent rising edges (i.e., a transition from the low level to the high level) output by the comparator 660 when the metallic pot covers the heating coil.

The control module 70 is connected to the inverter module 30, the comparison module 601, and the at least two switch modules 20. In the embodiment of FIG. 2, the control module 70 is connected to each of gates of Q1 and Q2 in the inverter module 30 and configured to transmit a drive pulse signal to each of Q1 and Q2. Optionally, the control module 70 comprises at least two first control pins. The at least two first control pins are in one-to-one correspondence with the at least two switch modules 20. Each of the at least two first control pins is connected to the first position terminal 230 of a corresponding one of the at least two switch modules 20 and configured to control the movable terminal 220 of each of the at least two switch modules 20 to be in contact with the first position terminal 230 of the switch module 20 or the second position terminal 240 of the switch module 20. In the embodiment of FIG. 2, the at least two first control pins are R1 to Rn. Optionally, the control module 70 comprises at least two second control pins. The at least two second control pins are correspondingly connected to control terminals of the gating module 40 and configured to output a selection pin to be switched on this time to the gating module 40. In the embodiment of FIG. 2, the at least two second control pins are S0, A1, and A2. Optionally, the control module 70 comprises an input pin connected to the output terminal of the comparator 660. The input pin is configured to receive an output result of the comparator 660.

In the embodiments of the present disclosure, the control module 70 is configured to: control a movable terminal of a first switch module among the at least two switch modules 20 to be in contact with a second position terminal of the first switch module; determine the resonance module 10 connected to the first switch module as the target resonance module, and control the gating module 40 to selectively switch on a circuit loop between the target resonance module and the oscillation drive module 50; obtain the comparison result output by the comparison module 601; determine an oscillation parameter of the target resonance module based on the comparison result, in which the oscillation parameter of the target resonance module comprises an oscillation period and/or an oscillation frequency; detect, based on the oscillation parameter of the target resonance module, whether a pot is placed at a target position corresponding to the target resonance module. Implementation details of pot detection performed by the control module 70 will be described in method embodiments below.

To sum up, in the technical solution according to the embodiments of the present disclosure, the oscillation drive module, the gating module, and the comparison module are additionally provided in the electromagnetic heating circuit. The oscillation drive module can transmit the oscillation drive signal to the target resonance module selectively switched on by the gating module. The comparison module can convert an analog signal output by the oscillation drive module into a digital signal. The control module can determine the oscillation parameter (the oscillation period or the oscillation frequency) of the target resonance module based on the comparison result output by the comparison module. Then, the pot detection is performed based on the above-mentioned oscillation parameter. The resonance module forms the Colpitts oscillator circuit with the oscillation drive module under the action of the oscillation drive signal. An oscillation parameter of the Colpitts oscillator circuit is determined by the inductance of the heating coil in the target resonance module and the capacitance of the entire circuit, and the inductance of the heating coil in the target resonance module changes depending on whether the pot is placed at the target position. Therefore, by detecting the oscillation parameter of the Colpitts oscillator circuit described above, it can be determined whether the pot is placed at the target position. The above-mentioned pot detection process does not involve the inverter module. In a case where the drive pulse signal is transmitted by the inverter module to other resonance modules other than the target resonance module, it can also be detected whether the pot is placed at the target position corresponding to the target resonance module. That is, when some of the resonance modules in the electromagnetic heating circuit are in the heating state, it can also be detected whether the pot is placed at the positions corresponding to the other resonance modules that are not in the heating state.

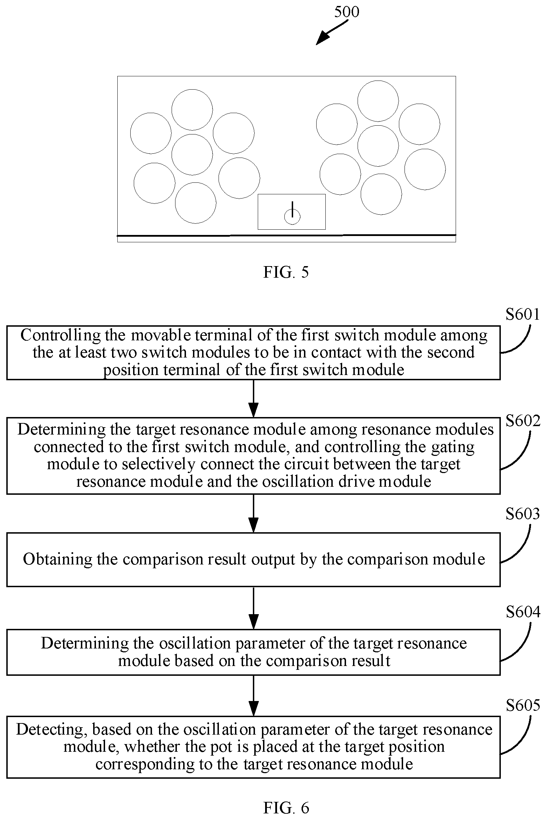

Referring to FIG. 5, FIG. 5 shows a schematic diagram of an electric device 500 according to an embodiment of the present disclosure. The electric device 500 may be an electromagnetic heating device provided with a plurality of heating coils, such as a multi-burner induction cooker. The electric device 500 comprises the electromagnetic heating circuit 100 as shown in FIG. 1 or FIG. 2.

In some embodiments, the electric device 500 comprises a housing configured to accommodate the above-mentioned electromagnetic heating circuit 100. In some embodiments, the housing of the electric device 500 comprises an operation panel connected to the control module. The operation panel comprises a plurality of functional controls, such as a start control, a heating duration adjustment control, and a heating power adjustment control. When a trigger signal for a certain functional control is received by the operation panel, a corresponding electrical signal is generated and transmitted to the control module. A corresponding control instruction is executed by the control module based on the above-mentioned electrical signal, thereby realizing an interaction between a user and the electric device 500.

Referring to FIG. 6, FIG. 6 shows a flowchart of a control method for an electric device according to an embodiment of the present disclosure. The electric device comprises the electromagnetic heating circuit 100 as provided in FIG. 1 or FIG. 2. The method comprises actions at blocks S601 to S605.

At block S601, the movable terminal of the first switch module among the at least two switch modules is controlled to be in contact with the second position terminal of the first switch module.

The number of first switch modules may be smaller than or equal to the number of switch modules of the electromagnetic heating circuit.

In some embodiments, the electric device is configured to, upon receiving a start instruction, determine all of the switch modules as the first switch module, and control the movable terminal of the first switch module to be in contact with the second position terminal of the first switch module, to switch on the circuit loop between the resonance module connected to the switch module and the gating module.

In some other embodiments, the electric device is configured to, when some of the resonance modules in the electromagnetic heating circuit are in a heating state, determine the resonance module that is not in the heating state as the first switch module, and control the movable terminal of the first switch module to be in contact with the second position terminal of the first switch module. A movable terminal of a switch module connected to a resonance module in the heating state is in contact with a first position terminal of the switch module to switch on the circuit loop between the resonance module and the inverter module. The inverter module is configured to transmit a drive pulse signal to the resonance module to cause the resonance module to enter the heating state.

As can be seen from the embodiment of FIG. 2, the control module comprises at least two first control pins (R1 to Rn), and different first control pins are connected to the first position terminals of different switch modules. The control module can transmit a control signal to a switch module connected to the first control pin via the first control pin to instruct the movable terminal of the first switch module to be in contact with the second position terminal of the first switch module, to connect a circuit loop between the resonance module connected to each first switch module and the gating module.

At block S602, the resonance module connected to the first switch module is determined as the target resonance module, and the gating module is controlled to selectively switch on the circuit loop between the target resonance module and the oscillation drive module.

The electric device is configured to, when one first switch module is provided, directly determine the resonance module connected to the first switch module as the target resonance module. The electric device is configured to, when a plurality of first switch modules are provided, sequentially determine, in accordance with a sequence of serial numbers of selection terminals of the gating module, resonance modules respectively connected to the plurality of first switch modules as the target resonance module.

As can be seen from the embodiment of FIG. 2, the control module comprises three second control pins (AO, A1, A2). Output signals of the above-mentioned three control pins may be configured to determine a selection pin selectively switched on by the gating module. A resonance module connected to the first switch module connected to the selection pin is the target resonance module. Optionally, a relationship between the output signals of the three control pins and the selection pin selectively switched on by the gating module is shown in Table-1 below.

[Table-1]

| A0 | A1 | A2 | Selection Pin Selectively Switched on by Gating Module |
|----|----|----|--------------------------------------------------------|
| 0 | 0 | 0 | Y0 |
| 0 | 0 | 1 | Y1 |

(continued)

| A0 | A1 | A2 | Selection Pin Selectively Switched on by Gating Module |
|----|----|----|-------------------------------------------------------|
| 0  | 1  | 0  | Y2 |
| 0  | 1  | 1  | Y3 |
| 1  | 0  | 0  | Y4 |
| 1  | 0  | 1  | Y5 |
| 1  | 1  | 0  | Y6 |
| 1  | 1  | 1  | Y7 |

The oscillation drive module is configured to transmit an oscillation drive signal to the target resonance module subsequent to the circuit loop between the oscillation drive module and the target resonance module is switched on. A frequency of the oscillation drive signal is set based on experiments or experience. Optionally, the frequency of the oscillation drive signal is greater than 100 Khz. Optionally, a duration during which a drive pulse signal is transmitted by the oscillation drive signal to the target resonance module is a predetermined duration. The predetermined duration is set based on experiments or experience. Exemplarily, the predetermined duration is 10 seconds.

During a process in which the oscillation drive signal is transmitted by the oscillation drive module to the target resonance module, the comparison module can compare the output voltage of the oscillation drive module with a predetermined voltage to obtain a comparison result, thereby converting an analog signal output by the oscillation drive module into a digital signal. Optionally, the predetermined voltage is 2.5 V. In some embodiments, a high level is output as the comparison result when the output voltage of the oscillation drive module is greater than the predetermined voltage, and a low level is output as the comparison result when the output voltage of the oscillation drive module is smaller than the predetermined voltage.

In addition, it should be noted that during the process in which the oscillation drive signal is transmitted by the oscillation drive module to the target resonance module, a current flowing through the heating coil in the target resonance module is generally relatively small. Optionally, a ratio between a first current and a second current is greater than a predetermined ratio. The predetermined ratio is set based on experiments or experience. For example, the predetermined ratio is 100. The first current refers to a current flowing through the heating coil in the target resonance module when a drive pulse signal is transmitted by the inverter module to the target resonance module. The second current refers to a current flowing through the heating coil in the target resonance module when the oscillation drive signal is transmitted by the oscillation drive module to the target resonance module. In this way, power consumed during the pot detection can be reduced, thereby saving power consumption of the electric device.

At block S603, the comparison result output by the comparison module is obtained.

Referring to the embodiment of FIG. 2, the comparison result output by the comparison module is read by the control module from a pin v.

At block S604, the oscillation parameter of the target resonance module is determined based on the comparison result.

The oscillation parameter of the target resonance module comprises an oscillation period and/or an oscillation frequency.

In some embodiments, when the oscillation parameter of the target resonance module comprises the oscillation period, the action at block S604 is implemented as: determining a time interval between two adjacent rising edges in the comparison result as the oscillation period.

The rising edge refers to a transition of the output of the comparison module from a low level to a high level. Referring to FIG. 4, when a waveform of the output voltage of the oscillation drive module is curve 1, the comparison result output by the comparison module can be seen in part (b) of FIG. 4. In this case, the oscillation period is T1. When a waveform of the output voltage of the oscillation drive module is curve 2, the comparison result output by the comparison module can be seen in part (c) of FIG. 4. In this case, the oscillation period is T1.

In some embodiments, when the oscillation parameter of the target resonance module comprises the oscillation frequency, the action at block S604 is implemented as: determining a time interval between two adjacent rising edges in the comparison result as the oscillation period; and determining the oscillation frequency based on the oscillation period.

The oscillation frequency is a reciprocal of the oscillation period. Referring to FIG. 4, when a waveform of the output voltage of the oscillation drive module is curve 1, the oscillation frequency is 1/T1; and when a waveform of the output voltage of the oscillation drive module is curve 2, the oscillation frequency is 1/T2.

At block S605, it is detected based on the oscillation parameter of the target resonance module whether the pot is placed at the target position corresponding to the target resonance module.

In some embodiments, when the oscillation parameter of the target resonance module comprises the oscillation period, the action at block S605 is implemented as: in response to the oscillation period being smaller than a predetermined duration, determining that the pot is placed at the target position; and in response to the oscillation period being greater than or equal to the predetermined duration, determining that no pot is placed at the target position. The predetermined duration may be preset. In some embodiments, the predetermined duration refers to an oscillation period of the target resonance module when no pot is placed at the target position. In some other embodiments, the predetermined duration refers to an oscillation period of the target resonance module when a distance between the pot and the heating coil is greater than a predetermined distance.

In some embodiments, when the oscillation parameter of the target resonance module comprises the oscillation frequency, the action at block S605 is implemented as: in response to the oscillation frequency being greater than a predetermined frequency, determining that the pot is placed at the target position; and in response to the oscillation period being smaller than or equal to the predetermined frequency, determining that no pot is placed at the target position. The predetermined frequency may be preset. In some embodiments, the predetermined frequency refers to an oscillation frequency of the target resonance module when no pot is placed at the target position. In some other embodiments, the predetermined duration refers to an oscillation frequency of the target resonance module when a distance between the pot and the heating coil is greater than a predetermined distance.

To sum up, in the technical solution according to the embodiments of the present disclosure, the oscillation drive module, the gating module, and the comparison module are additionally provided in the electromagnetic heating circuit. The oscillation drive module can transmit the oscillation drive signal to the target resonance module selectively switched on by the gating module. The comparison module can convert the analog signal output by the oscillation drive module into the digital signal. The control module can determine the oscillation parameter (the oscillation period or the oscillation frequency) of the target resonance module based on the comparison result output by the comparison module. Then, the pot detection is performed based on the above-mentioned oscillation parameter. The resonance module forms the Colpitts oscillator circuit with the oscillation drive module under the action of the oscillation drive signal. An oscillation parameter of the Colpitts oscillator circuit is determined by the inductance of the heating coil in the target resonance module and the capacitance of the entire circuit, and the inductance of the heating coil in the target resonance module changes depending on whether the pot is placed at the target position. Therefore, by detecting the oscillation parameter of the Colpitts oscillator circuit described above, it can be determined whether the pot is placed at the target position. The above-mentioned pot detection process does not involve the inverter module. In a case where the drive pulse signal is transmitted by the inverter module to other resonance modules other than the target resonance module, it can also be detected whether the pot is placed at the target position corresponding to the target resonance module. That is, when some of the resonance modules in the electromagnetic heating circuit are in the heating state, it can also be detected whether the pot is placed at the positions corresponding to the other resonance modules that are not in the heating state.

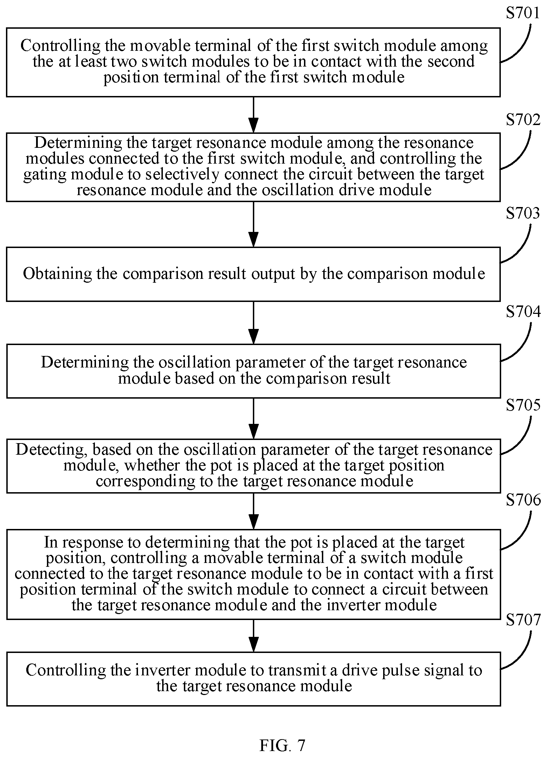

Referring to FIG. 7, FIG. 7 shows a flowchart of a control method for an electric device according to an embodiment of the present disclosure. The electric device comprises the electromagnetic heating circuit 100 according to FIG. 1 or FIG. 2. The method comprises actions at blocks S701 to S707.

At block S701, the movable terminal of the first switch module among the at least two switch modules is controlled to be in contact with the second position terminal of the first switch module.

At block S702, the resonance module connected to the first switch module is determined as the target resonance module, and the gating module is controlled to selectively switch on the circuit loop between the target resonance module and the oscillation drive module.

The oscillation drive module is configured to transmit the oscillation drive signal to the target resonance module.

At block S703, the comparison result output by the comparison module is obtained.

At block S704, the oscillation parameter of the target resonance module is determined based on the comparison result.

The oscillation parameter of the target resonance module comprises the oscillation period and/or the oscillation frequency.

At block S705, it is detected based on the oscillation parameter of the target resonance module whether the pot is placed at the target position corresponding to the target resonance module.

At block S706, in response to determining that the pot is placed at the target position, a movable terminal of a switch module connected to the target resonance module is controlled to be in contact with a first position terminal of the switch module to switch on a circuit loop between the target resonance module and the inverter module.

Referring to an example in FIG. 2, the control module is configured to transmit a control signal to the above-mentioned switch module via a first control pin corresponding to the switch module connected to the target resonance module to cause the movable terminal of the above-mentioned switch module to be in contact with the first position terminal of the switch module. In this way, the circuit loop between the target resonance module and the inverter module is switched on, and the circuit loop between the target resonance module and the gating module is switched off.

At block S707, the inverter module is controlled to transmit a drive pulse signal to the target resonance module.

A duty cycle of the drive pulse signal may be determined based on power requirements of the electric device, which is not limited in the embodiments of the present disclosure.

To sum up, in the technical solution according to the embodiments of the present disclosure, the oscillation drive module, the gating module, and the comparison module are additionally provided in the electromagnetic heating circuit. The oscillation drive module can transmit the oscillation drive signal to the target resonance module selectively switched on by the gating module. The comparison module can convert the analog signal output by the oscillation drive module into the digital signal. The control module can determine the oscillation parameter (the oscillation period or the oscillation frequency) of the target resonance module based on the comparison result output by the comparison module. Then, the pot detection is performed based on the above-mentioned oscillation parameter. The resonance module forms the Colpitts oscillator circuit with the oscillation drive module under the action of the oscillation drive signal, an oscillation parameter of the Colpitts oscillator circuit is determined by the inductance of the heating coil in the target resonance module and the capacitance of the entire circuit, and the inductance of the heating coil in the target resonance module changes depending on whether the pot is placed at the target position. Therefore, by detecting the oscillation parameter of the Colpitts oscillator circuit described above, it can be determined whether the pot is placed at the target position. The above-mentioned pot detection process does not involve the inverter module. In a case where the drive pulse signal is transmitted by the inverter module to other resonance modules other than the target resonance module, it can also be detected whether the pot is placed at the target position corresponding to the target resonance module. That is, when some of the resonance modules in the electromagnetic heating circuit are in the heating state, it can also be detected whether the pot is placed at the positions corresponding to the other resonance modules that are not in the heating state.

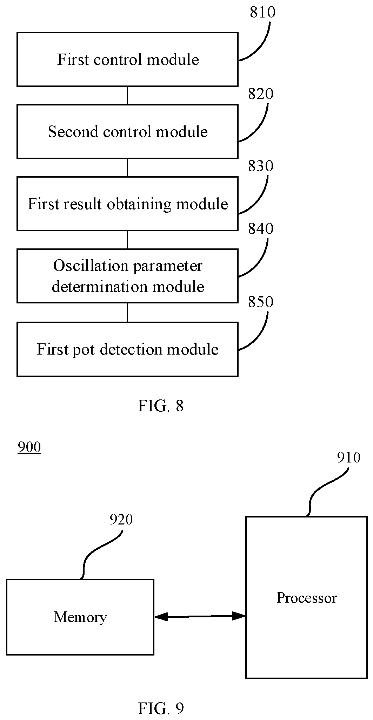

Referring to FIG. 8, FIG. 8 shows a structural block diagram of a control apparatus for an electric device according to an embodiment of the present disclosure. The electric device comprises the electromagnetic heating circuit as shown in FIG. 1 or FIG. 2. The apparatus comprises a first control module 810, a second control module 820, a first result obtaining module 830, an oscillation parameter determination module 840, and a first pot detection module 850.

The first control module 810 is configured to control the movable terminal of the first switch module among the at least two switch modules to be in contact with the second position terminal of the first switch module.

The second control module 820 is configured to determine the resonance module connected to the first switch module as the target resonance module, and control the gating module to selectively switch on the circuit loop between the target resonance module and the oscillation drive module. The oscillation drive module is configured to transmit the oscillation drive signal to the target resonance module.

The first result obtaining module 830 is configured to obtain the comparison result output by the comparison module.

The oscillation parameter determination module 840 is configured to determine the oscillation parameter of the target resonance module based on the comparison result. The oscillation parameter of the target resonance module comprises the oscillation period and/or the oscillation frequency.

The first pot detection module 850 is configured to determine, based on the oscillation parameter of the target resonance module, whether the pot is placed at the target position corresponding to the target resonance module.

In some embodiments, when the oscillation parameter of the target resonance module comprises the oscillation period, the oscillation parameter determination module 840 is configured to determine a time interval between two adjacent rising edges in the comparison result as the oscillation period. The first pot detection module 850 is configured to determine, in response to the oscillation period being smaller than a predetermined duration, that the pot is placed at the target position; and determine, in response to the oscillation period being greater than or equal to the predetermined duration, that no pot is placed at the target position.

In some embodiments, when the oscillation parameter of the target resonance module comprises the oscillation frequency, the oscillation parameter determination module 840 is configured to determine a time interval between two adjacent rising edges in the comparison result as the oscillation period; and determine the oscillation frequency based on the oscillation period. The first pot detection module 850 is configured to determine, in response to the oscillation frequency being greater than a predetermined frequency, that the pot is placed at the target position; and determine, in response to the oscillation period being smaller than or equal to the predetermined frequency, that no pot is placed at the target position.

In some embodiments, the apparatus further comprises a third control module and a fourth control module (not shown). The third control module is configured to control, in response to determining that the pot is placed at the target position, a movable terminal of a switch module connected to the target resonance module to be in contact with a first position terminal of the switch module to switch on a circuit loop between the target resonance module and the inverter module. The fourth control module is configured to control the inverter module to transmit a drive pulse signal to the target resonance module.

In some embodiments, the second control module 820 is configured to, in accordance with a sequence of serial numbers of selection terminals of the gating module, sequentially determine resonance modules respectively connected to the plurality of first switch modules as the target resonance module, and control the gating module to selectively switch on the circuit loop between the target resonance module and the oscillation drive module.

To sum up, in the technical solution according to the embodiments of the present disclosure, the oscillation drive module, the gating module, and the comparison module are additionally provided in the electromagnetic heating circuit. The oscillation drive module can transmit the oscillation drive signal to the target resonance module selectively switched on by the gating module. The comparison module can convert the analog signal output by the oscillation drive module into the digital signal. The control module can determine the oscillation parameter (the oscillation period or the oscillation frequency) of the target resonance module based on the comparison result output by the comparison module. Then, the pot detection is performed based on the above-mentioned oscillation parameter. The resonance module forms the Colpitts oscillator circuit with the oscillation drive module under the action of the oscillation drive signal. An oscillation parameter of the Colpitts oscillator circuit is determined by the inductance of the heating coil in the target resonance module and the capacitance of the entire circuit, and the inductance of the heating coil in the target resonance module changes depending on whether the pot is placed at the target position. Therefore, by detecting the oscillation parameter of the Colpitts oscillator circuit described above, it can be determined whether the pot is placed at the target position. The above-mentioned pot detection process does not involve the inverter module. In a case where the drive pulse signal is transmitted by the inverter module to other resonance modules other than the target resonance module, it can also be detected whether the pot is placed at the target position corresponding to the target resonance module. That is, when some of the resonance modules in the electromagnetic heating circuit are in the heating state, it can also be detected whether the pot is placed at the positions corresponding to the other resonance modules that are not in the heating state.

Those skilled in the art can clearly understand that, for convenience and simplicity of description, reference may be made to the corresponding processes in the foregoing method embodiments for specific operating processes of the above-mentioned apparatus and modules, and details thereof are omitted herein.

In the several embodiments provided in the present disclosure, coupling between the modules may be electrical, mechanical, or in other forms.

In addition, individual functional modules in the embodiments of the present disclosure may be integrated in one processing module or may be separately physically present, or two or more modules may be integrated in one module. The integrated module as described above may be achieved in the form of hardware, or may be achieved in the form of a software functional module.

As shown in FIG. 9, an example of the present disclosure also provides an electric device 900. The electric device 900 comprises the electromagnetic heating circuit 100 provided in FIG. 1 or FIG. 2. The control module in the electromagnetic heating circuit 100 comprises a processor 910, a memory 920, and one or more programs stored in the memory 920 and configured to be executed by the one or more processors 910. The one or more programs are configured to perform the control method for the electric device provided in FIG. 6 or FIG. 7.

The processor 910 may comprise one or more processing cores. The processor 910 is connected to various parts within the entire battery management system using various interfaces and buses, and is configured to execute various functions of the battery management system and process data by running or executing instructions, a program, a code set, or an instruction set stored in memory 920 and invoking data stored in memory 920. Optionally, the processor 910 may be implemented in at least one hardware form of digital signal processing (DSP), field-programmable gate array (FPGA), or programmable logic array (PLA). The processor 910 may integrate one or a combination of a central processing unit (CPU), a graphics processing unit (GPU), a modem, etc. The CPU is mainly configured to process an operating system, a user interface, applications, etc. The GPU is configured to render and draw a displayed content. The modem is configured to handle wireless communication. It can be understood that the above modem may not be integrated into the processor 910, but may be implemented by a separate communication chip.

The memory 920 may comprise a random access memory (RAM) 920 or a read-only memory (ROM) 920. The memory 920 may be configured to store instructions, a program, a code, a code set, or an instruction set. The memory 920 may comprise a program storage area and a data storage area. The program storage area may store instructions for implementing an operating system, instructions for at least one function (such as a touch function and a sound playback function), instructions for implementing the method embodiments described below, etc. The data storage area may also store data created during use of the electric device, etc.

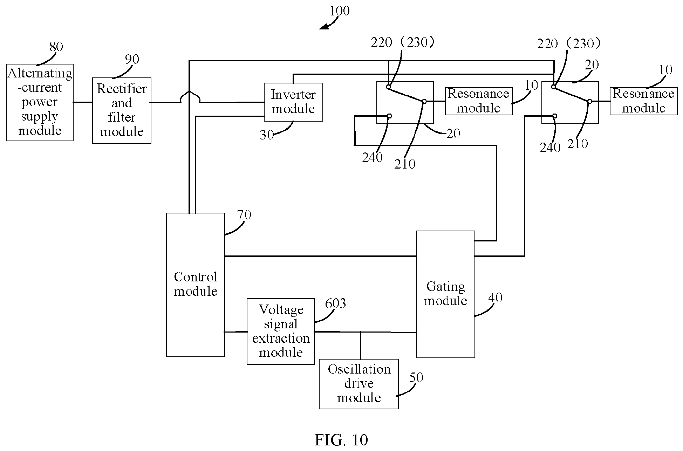

Referring to FIG. 10, FIG. 10 shows a structural diagram of an electromagnetic heating circuit 100 according to another embodiment of the present disclosure. The electromagnetic heating circuit 100 comprises at least two resonance modules 10, at least two switch modules 20, an inverter module 30, a gating module 40, an oscillation drive module 50, a voltage signal extraction module 603, and a control module 70.

Each of the at least two resonance modules 10 is configured to generate highfrequency resonance to cause a heating coil in the resonance module 10 to generate an alternating magnetic field. When a ferrous container is placed at a position corresponding to the above heating coil, the ferrous container cuts through magnetic field lines of the alternating magnetic field, thereby inducing an eddy current at a bottom of the container. The eddy current causes carriers at the bottom of the container to move at high speed and randomly. The carriers and atoms collide and rub against each other to generate thermal energy, thus providing a heating effect.

Each of the at least two switch modules 20 is configured to switch on or switch off a circuit loop between the resonance module 10 and the inverter module 30, and to switch on or switch off a circuit loop between the resonance module 10 and the gating module 40. When the circuit loop between the resonance module 10 and the inverter module 30 is switched on, the circuit loop between the resonance module 10 and the gating module 40 is switched off. When the circuit loop between the resonance module 10 and the inverter module 30 is switched off, the circuit loop between the resonance module 10 and the gating module 40 is switched on.

Each of the at least two switch modules 20 comprises a fixed terminal 210, a movable terminal 220, a first position terminal 230, and a second position terminal 240. The at least two switch modules 20 are in one-to-one correspondence with the at least two resonance modules 10. The fixed terminal 210 of each of the at least two switch modules 20 is connected to a corresponding one of the at least two resonance modules 10. Therefore, the number of switch modules 20 and the number of resonance modules 10 are the same. The first position terminal 230 of the switch module 20 is connected to the inverter module 30. When the movable terminal 220 of the switch module 20 is in contact with the first position terminal 230 of the switch module 20, a circuit loop between the resonance module 10 connected to the switch module 20 and the inverter module 30 is switched on. The second position terminal of the switch module 20 is connected to the gating module 40. When the movable terminal 220 of the switch module 20 is in contact with the second position terminal 240 of the switch module 20, a circuit loop between the resonance module 10 connected to the switch module 20 and the gating module 40 is switched on.

The inverter module 30 is configured to convert a direct-current power into a highfrequency alternating current power, which is processed by a transformer and a filter circuit to output a stable alternating-current power. The gating module 40 is configured to selectively switch on a circuit loop between a certain resonance module 10 and the oscillation drive module 50. The oscillation drive module 50 is connected to the gating module 40 and configured to transmit an oscillation drive signal to the resonance module 10 selectively switched on by the gating module 40. The voltage signal module 60 is connected to the oscillation drive module 50 and configured to output a peak voltage signal of the oscillation drive module 50 based on amplitude of an output signal of the oscillation drive module.

The control module 70 is connected to the voltage signal extraction module 603, the inverter module 30, the gating module 40, and at least two switch modules 10. The control module 70 is configured to: control a movable terminal of a first switch module among the at least two switch modules 20 to be in contact with a second position terminal 240 of the first switch module; determine the resonance module 10 connected to the first switch module as the target resonance module, and control the gating module 40 to selectively switch on a circuit loop between the target resonance module and the oscillation drive module 50; obtain an output result of the voltage signal extraction module 603, in which the output result is the peak voltage signal of the oscillation drive module; and detect, based on the peak voltage signal of the oscillation drive module 50, whether a pot is placed at a target position corresponding to the target resonance module.

After the oscillation drive signal is transmitted by the oscillation drive module 50 to the target resonance module selectively switched on by the gating module 40, the resonance module forms a Colpitts oscillator circuit with the oscillation drive module 50 under the action of the oscillation drive signal. Equivalent resistance of a heating coil in the Colpitts oscillator circuit changes depending on whether a metallic pot covers the heating coil. As the equivalent resistance of the heating coil changes, amplitude of an oscillation waveform output by the oscillation drive module 50 changes, and the peak voltage signal determined based on the amplitude of the oscillation waveform also changes correspondingly. Therefore, based on the peak voltage signal of the oscillation drive module 50, it can be determined whether the pot covers the above-mentioned heating coil. The above-mentioned pot detection process does not involve the inverter module 30. In a case where a drive pulse signal is transmitted by the inverter module 30 to other resonance modules 10 other than the target resonance module, it can also be detected whether the pot is placed at the target position corresponding to the target resonance module. That is, for the electromagnetic heating circuit according to the embodiments of the present disclosure, even when some of the resonance modules 10 in the electromagnetic heating circuit 100 are in a heating state, it can also be detected whether the pot is placed at positions corresponding to other resonance modules 10 that are not in the heating state.

In some embodiments, the electromagnetic heating circuit 100 further comprises an alternating-current power supply module 80 and a rectifier and filter module 90. The alternating-current power supply module 80 is configured to provide an alternating-current power to the electromagnetic heating circuit 100. The rectifier and filter module 90 is configured to convert an alternating-current electrical signal output by the alternating-current power supply module 80 into a direct-current electrical signal, and filter out a highfrequency noise in the direct-current electrical signal to more stably output an electrical signal. The alternating-current power supply module 80 is connected to an input terminal of the rectifier and filter module 90, and an output terminal of the rectifier and filter module 90 is connected to the inverter module 30.

To sum up, for the electromagnetic heating circuit according to the embodiments of the present disclosure, the oscillation drive module, the gating module, and the voltage signal extraction module are additionally provided in the electromagnetic heating circuit. The oscillation drive module can transmit the oscillation drive signal to the target resonance module selectively switched on by the gating module. The voltage signal extraction module can output the peak voltage signal of the oscillation drive module based on the amplitude of the output signal of the oscillation drive module. The control module can detect, based on the peak voltage signal of the oscillation drive module, whether the pot is placed at the target position. The resonance module forms the Colpitts oscillator circuit with the oscillation drive module under the action of the oscillation drive signal, and the equivalent resistance of the heating coil in the Colpitts oscillator circuit changes depending on whether the pot is placed at the target position. As the equivalent resistance of the heating coil changes, the amplitude of the oscillation waveform output by the oscillation drive module changes correspondingly, and the peak voltage signal determined based on the amplitude of the output signal of the oscillation drive module also changes correspondingly. Therefore, the pot detection can be performed based on the above-mentioned peak voltage signal. The above-mentioned pot detection process does not involve the inverter module. In a case where the drive pulse signal is transmitted by the inverter module to the other resonance modules other than the target resonance module, it can also be detected whether the pot is placed at the target position corresponding to the target resonance module. That is, when some of the resonance modules in the electromagnetic heating circuit are in the heating state, it can also be detected whether the pot is placed at the positions corresponding to the other resonance modules that are not in the heating state.

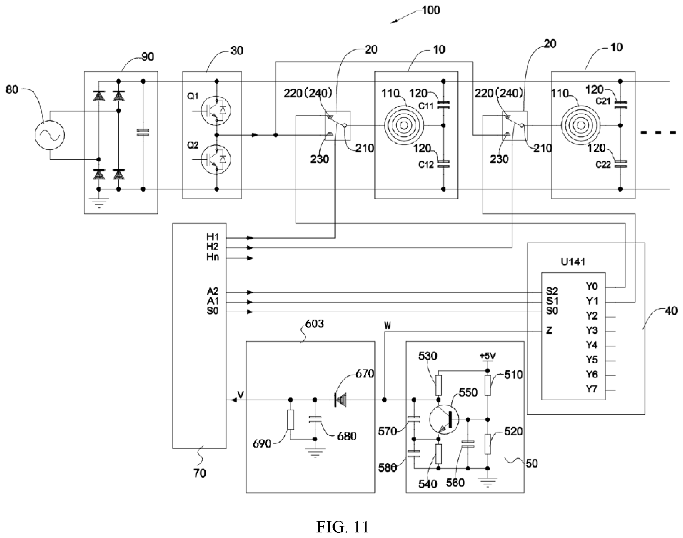

Each module involved in the electromagnetic heating circuit 100 provided in FIG. 10 will be described below with reference to FIG. 11. FIG. 11 shows a circuit diagram of an electromagnetic heating circuit 100 according to another embodiment of the present disclosure.

The resonance module 10 comprises a heating coil 110 and at least one resonant capacitor 120. The heating coil 110 is configured to generate an alternating magnetic field during resonance. When a ferrous container is placed at a position corresponding to the above-mentioned heating coil, the ferrous container cuts through magnetic field lines of the alternating magnetic field, thereby inducing an eddy current at a bottom of the container. The eddy current causes carriers at the bottom of the container to move at high speed and randomly. The carriers and atoms collide and rub against each other to generate thermal energy, thus providing a heating effect. The resonant capacitor 120 is configured to adjust a resonant frequency, which helps the resonance module 10 achieve strong feedback and enhance oscillation in the circuit. In an embodiment of FIG. 11, the resonance module 10 comprises a heating coil 110 and two resonant capacitors 120 (a first resonant capacitor C11 and a second resonant capacitor C12). The first resonant capacitor C11 and the second resonant capacitor C12 are connected in series to each other to form a series branch. An end of the series branch is connected to a first terminal of the inverter module 30, and another end of the series branch is connected to a second terminal of the inverter module 30. A first terminal of the heating coil 1100 is connected to a common terminal of the first resonant capacitor C11 and the second resonant capacitor C12.

In the embodiment of FIG. 11, the switch module 20 is a single-pole double-throw switch. The fixed terminal 210 of the switch module 20 is connected to a second terminal of the heating coil 110. The first position terminal 230 of the switch module 20 is connected to the inverter module 30. The second position terminal 240 of the switch module 20 is connected to the gating module 40.

The inverter module 30 is configured to convert direct-current electrical energy into a fixed-frequency fixed-voltage alternating current or a variable-frequency variable-voltage alternating current. The inverter module 30 may be a half-bridge inverter circuit, a full-bridge inverter circuit, or a single-transistor inverter circuit, and the embodiments of the present disclosure do not limit its implementation form. In the embodiment of FIG. 11, the inverter module 30 is a half-bridge inverter circuit composed of a first insulated gate bipolar transistor (IGBT) Q1 and a second insulated gate bipolar transistor Q2. A collector of Q1 is connected to the rectifier and filter module 80 and an end of the series branch (the series branch formed by the first resonant capacitor C11 and the second resonant capacitor C12 that are connected in series to each other). An emitter of Q2 is connected to a collector of Q2 and is connected to the rectifier and filter module 80 and another end of the series branch. Each of gates of Q1 and Q2 is connected to the control module 70.

The gating switch 40 is a multi-to-one analog switch. The gating switch 40 comprises a common terminal, a plurality of selection terminals, and a control terminal. The common terminal of the gating switch 40 is connected to an output terminal of the oscillation drive module 50. The at least two selection terminals are in one-to-one correspondence with the at least two switch modules 20, and each of the at least two selection terminals is connected to the second position terminal 240 of a corresponding one of the at least two switch modules 20. The number of selection terminals may be greater than or equal to the number of switch modules 210. When the number of selection terminals is greater than the number of switch modules 20, some of the plurality of selection terminals are left unconnected. The control terminal is connected to the control module 70. The number of control terminals is determined based on the number of selection terminals. For example, if the number of selection terminals is 8, then the number of control terminals is 3. For another example, if the number of selection terminals is 16, then the number of control terminals is 4. In the embodiment of FIG. 11, the gating switch 40 is an eight-to-one analog switch, which comprises eight selection pins Y0 to Y7 (i.e., the selection terminals), three control pins S0, A1, and A2 (i.e., the control terminals), and a common pin z (i.e., the common terminal).

In the embodiment of FIG. 11, the oscillation drive module 50 comprises a fifth resistor 510, a sixth resistor 520, a seventh resistor 530, an eighth resistor 540, a transistor 550, a second capacitor 560, a third capacitor 570, and a fourth capacitor 580.

The fifth resistor 510 and the sixth resistor 520 are connected in series to each other to form a third series branch. An end of the third series branch is connected to a second predetermined power supply, and another end of the third series branch is grounded. A common terminal of the fifth resistor 510 and the sixth resistor 520 is connected to a base of the transistor 550. The fifth resistor 510 and the sixth resistor 520 are configured to provide voltage division for the base of the transistor 550. The second predetermined power supply may be a low voltage of +5 V. In this way, a voltage of the base of the transistor 550 is 2.5 V.

A terminal of the seventh resistor 530 is connected to the second predetermined power supply, and another terminal of the seventh resistor 530 is connected to a collector of the transistor 550. The seventh resistor 530 is configured to provide voltage division for the collector of the transistor 550.

A terminal of the eighth resistor 540 is connected to an emitter of the transistor 550, and another terminal of the eighth resistor 540 is grounded. The eighth resistor 540 is configured to provide voltage division for the emitter of the transistor 550.

A terminal of the second capacitor 560 is connected to the base of the transistor 550, and another terminal of the second capacitor 560 is grounded. The second capacitor 560 is configured to stabilize the voltage of the base of the transistor 550. The third capacitor 570 and the fourth capacitor 580 are connected in series to each other to form a fourth series branch. An end of the fourth series branch is connected to the collector of the transistor 550 and the voltage signal extraction module 603, and another end of the fourth series branch is grounded. A common terminal of the third capacitor 570 and the fourth capacitor 580 is connected to the emitter of the transistor 550. The third capacitor 570 and the fourth capacitor 580 constitute an oscillation circuit.

In the embodiments of the present disclosure, the transistor 550 is an NPN transistor, and its conduction conditions comprise: the voltage of the base being higher than a voltage of the emitter, and a voltage of the collector being lower than the voltage of the base. In the embodiments of the present disclosure, when the transistor 550 is conducting, the third capacitor 570 and the fourth capacitor 580 are charged. In this case, the voltage of the emitter and the voltage of the collector increase, and therefore the conduction conditions of the transistor 550 are no longer satisfied. In this case, the transistor is cut off. The third capacitor 570 and the fourth capacitor 580 begin to discharge, and the voltage of the emitter and the voltage of the collector decrease until the conduction conditions of the transistor 550 are satisfied again. The oscillation circuit composed of the third capacitor 570 and the fourth capacitor 580 forms a Colpitts oscillator circuit with a heating coil in a resonance module that receives a drive oscillation signal.

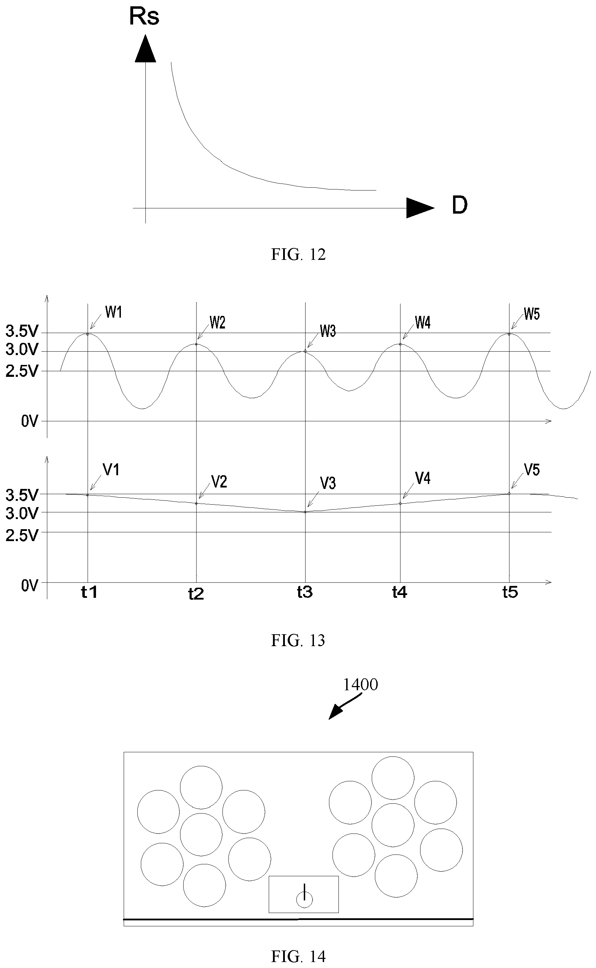

When a metallic pot covers the heating coil, equivalent resistance of the heating coil is related to a distance between the metallic pot and the heating coil. Referring to FIG. 12, FIG. 12 shows a graph of a relationship between equivalent resistance (Rs) of a heating coil and a distance (D) between a metallic pot and the heating coil according to an embodiment of the present disclosure. As the distance between the metallic pot and the heating coil increases, the equivalent resistance of the heating coil gradually decreases. As the distance between the metallic pot and the heating coil decreases, the equivalent resistance of the heating coil also increases. When the equivalent resistance of the heating coil increases, it indicates that a loss of the above-mentioned Colpitts oscillator circuit increases. In this case, amplitude of an oscillation waveform output by the oscillation drive module 50 decreases. Conversely, when the equivalent resistance of the heating coil decreases, it indicates that the loss of the above-mentioned Colpitts oscillator circuit decreases. In this case, the amplitude of the oscillation waveform output by the oscillation drive module 50 increases.

The voltage signal extraction module 603 is configured to output a peak voltage signal of the oscillation drive module 50 based on amplitude of an output signal of the oscillation drive module 50. Specifically, the voltage signal extraction module 603 is configured to convert amplitude of an analog signal output by the oscillation drive module 50 into a stable and smooth direct-current voltage signal, i.e., the above-mentioned peak voltage signal.

In the embodiment of FIG. 11, the voltage signal extraction module 603 comprises a diode 670, a fifth capacitor 680, and a ninth capacitor 690. An anode of the diode 670 is connected to the oscillation drive module 50. Optionally, a forward voltage drop of the diode 670 is 0 V. The fifth capacitor 680 and the ninth capacitor 690 are connected in parallel to each other to form a parallel branch. An end of the parallel branch is grounded, and another end of the parallel branch is connected to a cathode of the diode 670 and the control module 70. The fifth capacitor 680 is configured to stabilize a voltage of an output signal of the voltage signal extraction module 603. Optionally, the fifth capacitor 680 has a capacitance value of 0.1 μF. The ninth capacitor 690 is a discharge resistor with a typically relatively large resistance value, for example, of 100 kΩ.

Referring to FIG. 13, FIG. 13 shows a waveform diagram of an oscillation waveform output by the oscillation drive module 50. A time point t1 is a time point of a maximum voltage of the oscillation waveform output by the oscillation drive module 50 when no metallic pot covers the heating coil in the target resonance module. In this case, a peak output voltage of the oscillation drive module 50 (i.e., voltage W1) is 3.5 V, and the forward voltage drop of the diode is 0 V. If a voltage at an output terminal of the voltage signal extraction module 603 (i.e., voltage V1) is lower than 3.5 V, the diode 670 is conducting, and a voltage at the output terminal of the voltage signal extraction module 603 is raised to 3.5 V. Due to an energy storage effect of the fifth capacitor 680 and relatively large resistance of the ninth capacitor 690, the voltage at the output terminal of the voltage signal extraction module 603 remains unchanged for a period of time. A time point t3 is a time point of a maximum voltage of the oscillation waveform output by the oscillation drive module 50 when the metallic pot covers the heating coil in the target resonance module. In this case, an output voltage of the oscillation drive module 50 (i.e., voltage W3) is lower than the voltage W1. If the voltage at the output terminal of the voltage signal extraction module 603 (i.e., voltage V3) is higher than 3 V, the voltage at the output terminal of the voltage signal extraction module 603 is discharged to 3 V by the ninth capacitor 690. If the voltage of the output terminal of the voltage signal extraction module 603 is lower than 3 V, the diode 670 is conducting, and the voltage at the output terminal of the voltage signal extraction module 603 is raised to 3 V. Due to the energy storage effect of the fifth capacitor 680 and the relatively large resistance of the ninth capacitor 690, the voltage at the output terminal of the voltage signal extraction module 603 remains unchanged for a period of time. As can be seen from FIG. 13, by reasonably determining the predetermined voltage threshold, the control module 70 can perform the pot detection based on a relationship between the voltage at the output terminal of the voltage signal extraction module 603 and the predetermined voltage threshold.

The control module 70 is connected to the inverter module 30, the voltage signal extraction module 603, and the at least two switch modules 20. In the embodiment of FIG. 11, the control module 70 is connected to each of the gates of Q1 and Q2 in the inverter module 30 and configured to transmit a drive pulse signal to each of Q1 and Q2. Optionally, the control module 70 comprises at least two first control pins. The at least two first control pins are in one-to-one correspondence with the at least two switch modules 20. Each of the at least two first control pins is connected to the first position terminal 230 of a corresponding one of the at least two switch modules 20 and configured to control the movable terminal 220 of each of the at least two switch modules 20 to be in contact with the first position terminal 230 of the switch module 20 or the second position terminal 240 of the switch module 20. In the embodiment of FIG. 11, the at least two first control pins are R1 to Rn. Optionally, the control module 70 comprises at least two second control pins. The at least two second control pins are correspondingly connected to control terminals of the gating module 40 and configured to output a selection pin to be switched on this time to the gating module 40. In the embodiment of FIG. 11, the at least two second control pins are S0, A1, and A2. Optionally, the control module 70 comprises an input pin connected to the output terminal of the comparator 660. The input pin is configured to receive the cathode of the the diode 670.

In the embodiments of the present disclosure, the control module 70 is configured to: control a movable terminal of a first switch module among the at least two switch modules 20 to be in contact with a second position terminal of the first switch module; determine the resonance module 10 connected to the first switch module as the target resonance module, and control the gating module 40 to selectively switch on a circuit loop between the target resonance module and the oscillation drive module 50; obtain an output result of the voltage signal extraction module 603, in which the output result is the peak voltage signal of the oscillation drive module 50; and detect, based on the peak voltage signal of the oscillation drive module 50, whether a pot is placed at a target position corresponding to the target resonance module. Implementation details of pot detection performed by the control module 70 will be described in method embodiments below.

To sum up, in the technical solution according to the embodiments of the present disclosure, the oscillation drive module, the gating module, and the voltage signal extraction module are additionally provided in the electromagnetic heating circuit. The oscillation drive module can transmit the oscillation drive signal to the target resonance module selectively switched on by the gating module. The voltage signal extraction module can output the peak voltage signal of the oscillation drive module based on the amplitude of the output signal of the oscillation drive module. The control module can detect, based on the peak voltage signal of the oscillation drive module, whether the pot is placed at the target position. The resonance module forms the Colpitts oscillator circuit with the oscillation drive module under the action of the oscillation drive signal, and the equivalent resistance of the heating coil in the Colpitts oscillator circuit changes depending on whether the pot is placed at the target position. As the equivalent resistance of the heating coil changes, the amplitude of the oscillation waveform output by the oscillation drive module changes correspondingly, and the peak voltage signal determined based on the amplitude of the output signal of the oscillation drive module also changes correspondingly. Therefore, the pot detection can be performed based on the above-mentioned peak voltage signal. The above-mentioned pot detection process does not involve the inverter module. In a case where the drive pulse signal is transmitted by the inverter module to the other resonance modules other than the target resonance module, it can also be detected whether the pot is placed at the target position corresponding to the target resonance module. That is, when some of the resonance modules in the electromagnetic heating circuit are in a heating state, it can also be detected whether the pot is placed at positions corresponding to other resonance modules that are not in the heating state.

Referring to FIG. 14, FIG. 14 shows a schematic diagram of an electric device 1400 according to another embodiment of the present disclosure. The electric device 1400 may be an electromagnetic heating device provided with a plurality of heating coils, such as a multi-burner induction cooker. The electric device 1400 comprises the electromagnetic heating circuit 100 as shown in FIG. 10 or FIG. 11.

In some embodiments, the electric device 1400 comprises a housing configured to accommodate the above-mentioned electromagnetic heating circuit 100. In some embodiments, the housing of the electric device 1400 comprises an operation panel connected to the control module. The operation panel comprises a plurality of functional controls, such as a start control, a heating duration adjustment control, and a heating power adjustment control. When a trigger signal for a certain functional control is received by the operation panel, a corresponding electrical signal is generated and transmitted to the control module. A corresponding control instruction is executed by the control module based on the above-mentioned electrical signal, thereby realizing an interaction between a user and the electric device 1400.

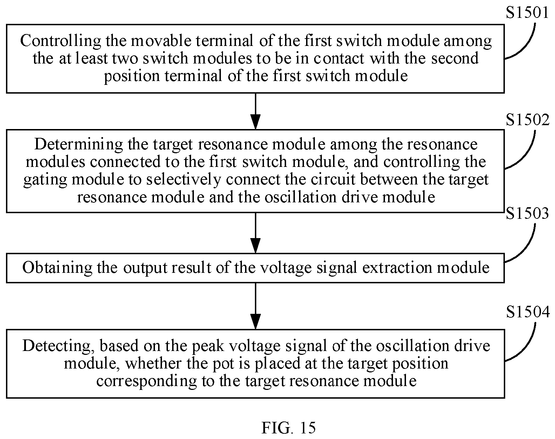

Referring to FIG. 15, FIG. 15 shows a flowchart of a control method for an electric device according to yet another embodiment of the present disclosure. The electric device comprises the electromagnetic heating circuit 100 as provided in FIG. 1 or FIG. 11. The method comprises actions at blocks S1501 to S1504.

At block S1501, the movable terminal of the first switch module among the at least two switch modules is controlled to be in contact with the second position terminal of the first switch module.

The number of first switch modules may be smaller than or equal to the number of switch modules of the electromagnetic heating circuit.

In some embodiments, the electric device is configured to, upon receiving a start instruction, determine all of the switch modules as the first switch module, and control the movable terminal of the first switch module to be in contact with the second position terminal of the first switch module, to switch on the circuit loop between the resonance module connected to the switch module and the gating module.

In some other embodiments, the electric device is configured to, when some of the resonance modules in the electromagnetic heating circuit are in a heating state, determine the resonance module that is not in the heating state as the first switch module, and control the movable terminal of the first switch module to be in contact with the second position terminal of the first switch module. A movable terminal of a switch module connected to a resonance module in the heating state is in contact with a first position terminal of the switch module to switch on the circuit loop between the resonance module and the inverter module. The inverter module is configured to transmit a drive pulse signal to the resonance module to cause the resonance module to enter the heating state.

As can be seen from the embodiment of FIG. 11, the control module comprises at least two first control pins (R1 to Rn), and different first control pins are connected to the first position terminals of different switch modules. The control module can transmit a control signal to a switch module connected to the first control pin via the first control pin to instruct the movable terminal of the first switch module to be in contact with the second position terminal of the first switch module, to switch on a circuit loop between the resonance module connected to each first switch module and the gating module.

At block S1502, the resonance module connected to the first switch module is determined as the target resonance module, and the gating module is controlled to selectively switch on the circuit loop between the target resonance module and the oscillation drive module.

The electric device is configured to, when one first switch module is provided, directly determine the resonance module connected to the first switch module as the target resonance module. The electric device is configured to, when a plurality of first switch modules are provided, sequentially determine, in accordance with a sequence of serial numbers of selection terminals of the gating module, resonance modules respectively connected to the plurality of first switch modules as the target resonance module.

As can be seen from the embodiment of FIG. 11, the control module comprises three second control pins (A0, A1, A2). Output signals of the above-mentioned three control pins may be configured to determine a selection pin selectively switched on by the gating module. A resonance module connected to the first switch module connected to the selection pin is the target resonance module. Optionally, a relationship between the output signals of the three control pins and the selection pin selectively switched on by the gating module is shown in Table-2 below.

[Table-2]

| A0 | A1 | A2 | Selection Pin Selectively Switched on by Gating Module |
|----|----|----|--------------------------------------------------------|
| 0  | 0  | 0  | Y0 |
| 0  | 0  | 1  | Y1 |
| 0  | 1  | 0  | Y2 |
| 0  | 1  | 1  | Y3 |
| 1  | 0  | 0  | Y4 |
| 1  | 0  | 1  | Y5 |
| 1  | 1  | 0  | Y6 |
| 1  | 1  | 1  | Y7 |

The oscillation drive module is configured to transmit an oscillation drive signal to the target resonance module subsequent to the circuit loop between the oscillation drive module and the target resonance module is switched on. A frequency of the oscillation drive signal is set based on experiments or experience. Optionally, the frequency of the oscillation drive signal is greater than 100 Khz. Optionally, a duration during which a drive pulse signal is transmitted by the oscillation drive signal to the target resonance module is a predetermined duration. The predetermined duration is set based on experiments or experience. Exemplarily, the predetermined duration is 10 seconds.

During a process in which the oscillation drive signal is transmitted by the oscillation drive module to the target resonance module, the voltage signal extraction module can convert the amplitude of the oscillation waveform output by the oscillation drive module into a stable and smooth direct-current voltage signal, i.e., the peak voltage signal of the oscillation drive module is output based on the amplitude of the output signal of the oscillation drive module.

In addition, it should be noted that during the process in which the oscillation drive signal is transmitted by the oscillation drive module to the target resonance module, a current flowing through the heating coil in the target resonance module is generally relatively small. Optionally, a ratio between a first current and a second current is greater than a predetermined ratio. The predetermined ratio is set based on experiments or experience. For example, the predetermined ratio is 100. The first current refers to a current flowing through the heating coil in the target resonance module when a drive pulse signal is transmitted by the inverter module to the target resonance module. The second current refers to a current flowing through the heating coil in the target resonance module when the oscillation drive signal is transmitted by the oscillation drive module to the target resonance module. In this way, power consumed during the pot detection can be reduced, thereby saving power consumption of the electric device.

At block S1503, the output result of the voltage signal extraction module is obtained.

The output result is the peak voltage signal output by the oscillation drive module. Referring to the embodiment of FIG. 11, the output result of the voltage signal extraction module is read by the control module from a pin v.

At block S1504, it is detected based on the peak voltage signal of the oscillation drive module whether the pot is placed at the target position corresponding to the target resonance module.

In some embodiments, the control module is configured to: determine a peak voltage of the oscillation drive module based on the peak voltage signal; in response to the peak voltage of the oscillation drive module being smaller than a predetermined voltage threshold, determine that the pot is placed at the target position; and in response to the output voltage of the oscillation drive module being greater than or equal to the predetermined voltage threshold, determine that no pot is placed at the target position.

Optionally, the control module is configured to perform analog-to-digital conversion, ADC, on the peak voltage signal output by the voltage signal extraction module to obtain a peak voltage of the oscillation drive module. The predetermined voltage threshold is set based on experiments or experience. Exemplarily, the predetermined voltage threshold is 3.2 V. With continued reference to FIG. 13, at time point t1, the peak voltage determined based on the peak voltage signal output by the voltage signal extraction module is 3.5 V, which is greater than the above-mentioned predetermined voltage threshold. Therefore, no pot is placed at the target position at time point t1. At time point t3, the peak voltage determined based on the peak voltage signal output by the voltage signal extraction module is 3 V, which is smaller than the above-mentioned predetermined voltage threshold. Therefore, the pot is placed at the target position at time point t3.

After the oscillation drive signal is transmitted by the oscillation drive module to the target resonance module selectively switched on by the gating module, the resonance module forms a Colpitts oscillator circuit with the oscillation drive module under the action of the oscillation drive signal. Equivalent resistance of a heating coil in the Colpitts oscillator circuit changes depending on whether the metallic pot covers the heating coil. As the equivalent resistance of the heating coil changes, the amplitude of the oscillation waveform output by the oscillation drive module changes, and the peak voltage signal determined based on the amplitude of the oscillation waveform described above also changes correspondingly. Therefore, it can be determined based on the peak voltage signal of the oscillation drive module 50 whether the pot covers the above-mentioned heating coil.

In some embodiments, when it is determined by the control module that the pot covers the heating coil, a value of a pot flag bit corresponding to the coil is set to a first value; and when it is determined by the control module that no pot covers the heating coil, a value of a pot flag bit corresponding to the coil is set to a second value. The first value and the second value are set based on experiments or experience. For example, the first value is 1, and the second value is 0.

To sum up, in the technical solution according to the embodiments of the present disclosure, the oscillation drive module, the gating module, and the voltage signal extraction module are additionally provided in the electromagnetic heating circuit. The oscillation drive module can transmit the oscillation drive signal to the target resonance module selectively switched on by the gating module. The voltage signal extraction module can output the peak voltage signal of the oscillation drive module based on the amplitude of the output signal of the oscillation drive module. The control module can detect, based on the peak voltage signal of the oscillation drive module, whether the pot is placed at the target position. The resonance module forms the Colpitts oscillator circuit with the oscillation drive module under the action of the oscillation drive signal, and the equivalent resistance of the heating coil in the Colpitts oscillator circuit changes depending on whether the pot is placed at the target position. As the equivalent resistance of the heating coil changes, the amplitude of the oscillation waveform output by the oscillation drive module changes correspondingly, and the peak voltage signal determined based on the amplitude of the output signal of the oscillation drive module also changes correspondingly. Therefore, the pot detection can be performed based on the above-mentioned peak voltage signal. The above-mentioned pot detection process does not involve the inverter module. In a case where the drive pulse signal is transmitted by the inverter module to the other resonance modules other than the target resonance module, it can also be detected whether the pot is placed at the target position corresponding to the target resonance module. That is, when some of the resonance modules in the electromagnetic heating circuit are in the heating state, it can also be detected whether the pot is placed at the positions corresponding to the other resonance modules that are not in the heating state.

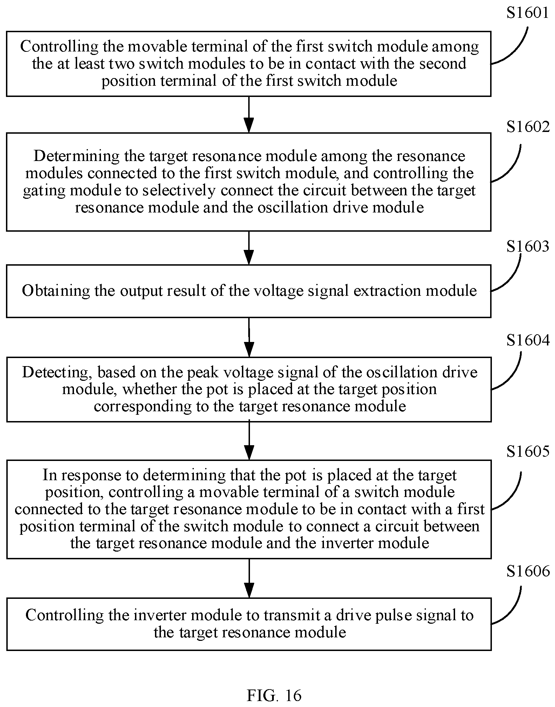

Referring to FIG. 16, FIG. 16 shows a flowchart of a control method for an electric device according to an embodiment of the present disclosure. The electric device comprises the electromagnetic heating circuit 100 as provided in FIG. 10 or FIG. 11. The method comprises actions at blocks S1601 to S1606.

At block S1601, the movable terminal of the first switch module among the at least two switch modules is controlled to be in contact with the second position terminal of the first switch module.

At block S1602, the resonance module connected to the first switch module is determined as the target resonance module, and the gating module is controlled to selectively switch on the circuit loop between the target resonance module and the oscillation drive module.

The oscillation drive module is configured to transmit the oscillation drive signal to the target resonance module.

At block S1603, the output result of the voltage signal extraction module is obtained.

The output result is the peak voltage signal of the oscillation drive module.

At block S1604, it is detected based on the peak voltage signal of the oscillation drive module whether the pot is placed at the target position corresponding to the target resonance module.

At block S1605, in response to determining that the pot is placed at the target position, controlling a movable terminal of a switch module connected to the target resonance module to be in contact with a first position terminal of the switch module to switch on a circuit loop between the target resonance module and the inverter module.

In combination with an example in FIG. 11, the control module is configured to transmit a control signal to the above-mentioned switch module via a first control pin corresponding to the switch module connected to the target resonance module to cause the movable terminal of the above-mentioned switch module to be in contact with the first position terminal of the switch module. In this way, the circuit loop between the target resonance module and the inverter module is switched on, and the circuit loop between the target resonance module and the gating module is switched off.

At block S1606, the inverter module is controlled to transmit a drive pulse signal to the target resonance module.

A duty cycle of the drive pulse signal may be determined based on power requirements of the electric device, which is not limited in the embodiments of the present disclosure.

To sum up, in the technical solution according to the embodiments of the present disclosure, the oscillation drive module, the gating module, and the voltage signal extraction module are additionally provided in the electromagnetic heating circuit. The oscillation drive module can transmit the oscillation drive signal to the target resonance module selectively switched on by the gating module. The voltage signal extraction module can output the peak voltage signal of the oscillation drive module based on the amplitude of the output signal of the oscillation drive module. The control module can detect, based on the peak voltage signal of the oscillation drive module, whether the pot is placed at the target position. The resonance module forms the Colpitts oscillator circuit with the oscillation drive module under the action of the oscillation drive signal, and the equivalent resistance of the heating coil in the Colpitts oscillator circuit changes depending on whether the pot is placed at the target position. As the equivalent resistance of the heating coil changes, the amplitude of the oscillation waveform output by the oscillation drive module changes correspondingly, and the peak voltage signal determined based on the amplitude of the output signal of the oscillation drive module also changes correspondingly. Therefore, the pot detection can be performed based on the above-mentioned peak voltage signal. The above-mentioned pot detection process does not involve the inverter module. In a case where the drive pulse signal is transmitted by the inverter module to the other resonance modules other than the target resonance module, it can also be detected whether the pot is placed at the target position corresponding to the target resonance module. That is, when some of the resonance modules in the electromagnetic heating circuit are in the heating state, it can also be detected whether the pot is placed at the positions corresponding to the other resonance modules that are not in the heating state.

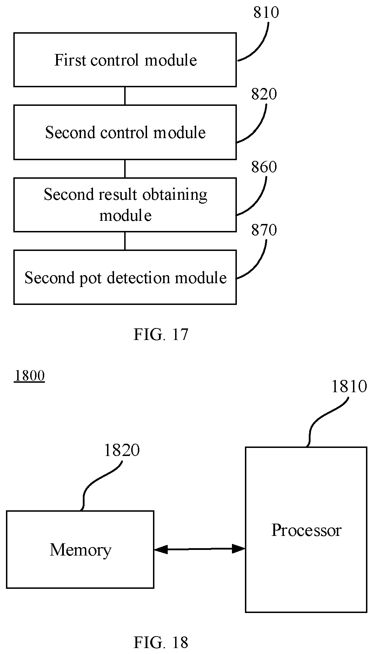

Referring to FIG. 17, FIG. 17 shows a structural block diagram of a control apparatus for an electric device according to an embodiment of the present disclosure. The electric device comprises the electromagnetic heating circuit as shown in FIG. 10 or FIG. 11. The apparatus comprises a first control module 810, a second control module 820, a second result obtaining module 860, and a second pot detection module 870.

The first control module 810 is configured to control the movable terminal of the first switch module among the at least two switch modules to be in contact with the second position terminal of the first switch module.

The second control module 820 is configured to determine the resonance module connected to the first switch module as the target resonance module, and control the gating module to selectively switch on the circuit loop between the target resonance module and the oscillation drive module. The oscillation drive module is configured to transmit the oscillation drive signal to the target resonance module.

The second result obtaining module 860 is configured to obtain the output result of the voltage signal extraction module. The output result is the peak voltage signal of the oscillation drive module.

The second pot detection module 870 is configured to detect, based on the peak voltage signal of the oscillation drive module, whether the pot is placed at the target position corresponding to the target resonance module.

In some embodiments, the second pot detection module 870 is configured to: determine a peak voltage of the oscillation drive module based on the peak voltage signal; in response to the peak voltage of the oscillation drive module being smaller than a predetermined voltage threshold, determine that the pot is placed at the target position; and in response to the output voltage of the oscillation drive module being greater than or equal to the predetermined voltage threshold, determine that no pot is placed at the target position.

In some embodiments, the apparatus further comprises a third control module and a fourth control module (not shown). The third control module is configured to control, in response to determining that the pot is placed at the target position, a movable terminal of a switch module connected to the target resonance module to be in contact with a first position terminal of the switch module to switch on a circuit loop between the target resonance module and the inverter module. The fourth control module is configured to control the inverter module to transmit a drive pulse signal to the target resonance module.

In some embodiments, the second control module 820 is configured to, in accordance with a sequence of serial numbers of selection terminals of the gating module, sequentially determine resonance modules respectively connected to the plurality of first switch modules as the target resonance module, and control the gating module to selectively switch on the circuit loop between the target resonance module and the oscillation drive module.

To sum up, in the technical solution according to the embodiments of the present disclosure, the oscillation drive module, the gating module, and the voltage signal extraction module are additionally provided in the electromagnetic heating circuit. The oscillation drive module can transmit the oscillation drive signal to the target resonance module selectively switched on by the gating module. The voltage signal extraction module can output the peak voltage signal of the oscillation drive module based on the amplitude of the output signal of the oscillation drive module. The control module can detect, based on the peak voltage signal of the oscillation drive module, whether the pot is placed at the target position. The resonance module forms the Colpitts oscillator circuit with the oscillation drive module under the action of the oscillation drive signal, and the equivalent resistance of the heating coil in the Colpitts oscillator circuit changes depending on whether the pot is placed at the target position. As the equivalent resistance of the heating coil changes, the amplitude of the oscillation waveform output by the oscillation drive module changes correspondingly, and the peak voltage signal determined based on the amplitude of the output signal of the oscillation drive module also changes correspondingly. Therefore, the pot detection can be performed based on the above-mentioned peak voltage signal. The above-mentioned pot detection process does not involve the inverter module. In a case where the drive pulse signal is transmitted by the inverter module to the other resonance modules other than the target resonance module, it can also be detected whether the pot is placed at the target position corresponding to the target resonance module. That is, when some of the resonance modules in the electromagnetic heating circuit are in the heating state, it can also be detected whether the pot is placed at the positions corresponding to the other resonance modules that are not in the heating state.

Those skilled in the art can clearly understand that, for convenience and simplicity of description, reference may be made to the corresponding processes in the foregoing method embodiments for specific operating processes of the above-mentioned apparatus and modules, and details thereof are omitted herein.

In the several embodiments provided in the present disclosure, coupling between the modules may be electrical, mechanical, or in other forms.

In addition, individual functional modules in the embodiments of the present disclosure may be integrated in one processing module or may be separately physically present, or two or more modules may be integrated in one module. The integrated module as described above may be achieved in the form of hardware, or may be achieved in the form of a software functional module.

As shown in FIG. 18, an example of the present disclosure also provides an electric device 1800. The electric device 1800 comprises the electromagnetic heating circuit 100 provided in FIG. 10 or FIG. 11. The control module of the electromagnetic heating circuit 100 comprises a processor 1810, a memory 1820, and one or more programs stored in the memory 1820 and configured to be executed by the one or more processors 1810. The one or more programs are configured to perform the control method for the electric device provided in FIG. 15 or FIG. 16.

The processor 1810 may comprise one or more processing cores. The processor 1810 is connected to various parts within the entire battery management system using various interfaces and buses, and is configured to execute various functions of the battery management system and process data by running or executing instructions, a program, a code set, or an instruction set stored in memory 1820 and invoking data stored in memory 1820. Optionally, the processor 1810 may be implemented in at least one hardware form of digital signal processing (DSP), field-programmable gate array (FPGA), or programmable logic array (PLA). The processor 1810 may integrate one or a combination of a central processing unit (CPU), a graphics processing unit (GPU), a modem, etc. The CPU is mainly configured to process an operating system, a user interface, applications, etc. The GPU is configured to render and draw a displayed content. The modem is configured to handle wireless communication. It can be understood that the above modem may not be integrated into the processor 1810, but may be implemented by a separate communication chip.

The memory 1820 may comprise a random access memory (RAM) 1820 or a read-only memory (ROM) 1820. The memory 1820 may be configured to store instructions, a program, a code, a code set, or an instruction set. The memory 1820 may comprise a program storage area and a data storage area. The program storage area may store instructions for implementing an operating system, instructions for implementing at least one function (such as a touch function and a sound playback function), instructions for implementing the method embodiments described below, etc. The data storage area may also store data created during use of the electric device, etc.

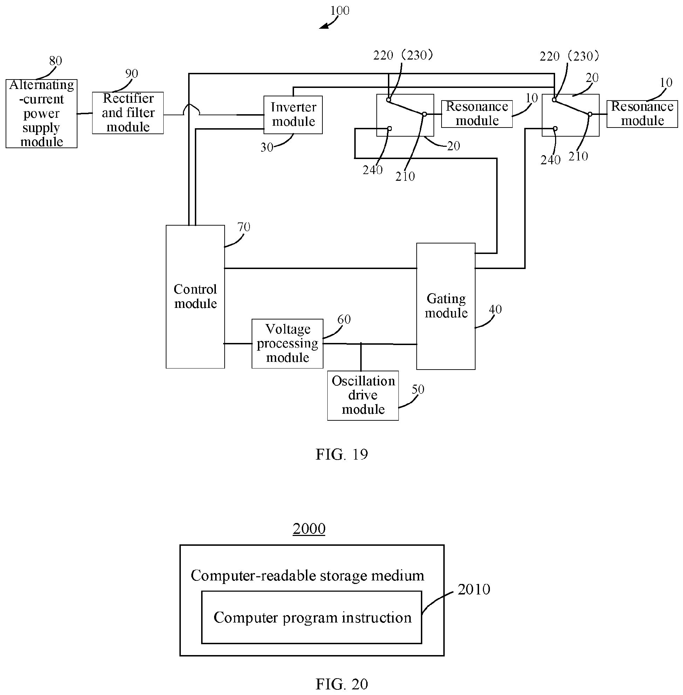

Referring to FIG. 19, FIG. 19 shows a structural diagram of an electromagnetic heating circuit 100 according to yet another embodiment of the present disclosure. The electromagnetic heating circuit 100 comprises at least two resonance modules 10, at least two switch modules 20, an inverter module 30, a gating module 40, an oscillation drive module 50, a voltage processing module 60, and a control module 70.

Each of the at least two resonance modules 10 is configured to generate highfrequency resonance to cause a heating coil in the resonance module 10 to generate an alternating magnetic field. When a ferrous container is placed at a position corresponding to the above heating coil, the ferrous container cuts through magnetic field lines of the alternating magnetic field, thereby inducing an eddy current at a bottom of the container. The eddy current causes carriers at the bottom of the container to move at high speed and randomly. The carriers and atoms collide and rub against each other to generate thermal energy, thus providing a heating effect.

Each of the at least two switch modules 20 is configured to switch on or switch off a circuit loop between the resonance module 10 and the inverter module 30, and to switch on or switch off a circuit loop between the resonance module 10 and the gating module 40. When the circuit loop between the resonance module 10 and the inverter module 30 is switched on, the circuit loop between the resonance module 10 and the gating module 40 is switched off. When the circuit loop between the resonance module 10 and the inverter module 30 is switched off, the circuit loop between the resonance module 10 and the gating module 40 is switched on.

Each of the at least two switch modules 20 comprises a fixed terminal 210, a movable terminal 220, a first position terminal 230, and a second position terminal 240. The at least two switch modules 20 are in one-to-one correspondence with the at least two resonance modules 10. The fixed terminal 210 of each of the at least two switch modules 20 is connected to a corresponding one of the at least two resonance modules 10. Therefore, the number of switch modules 20 and the number of resonance modules 10 are the same. The first position terminal 230 of the switch module 20 is connected to the inverter module 30. When the movable terminal 220 of the switch module 20 is in contact with the first position terminal 230 of the switch module 20, a circuit loop between the resonance module 10 connected to the switch module 20 and the inverter module 30 is switched on. The second position terminal of the switch module 20 is connected to the gating module 40. When the movable terminal 220 of the switch module 20 is in contact with the second position terminal 240 of the switch module 20, a circuit loop between the resonance module 10 connected to the switch module 20 and the gating module 40 is switched on.

The inverter module 30 is configured to convert a direct-current power into a highfrequency alternating current power, which is processed by a transformer and a filter circuit to output a stable alternating-current power. The gating module 40 is configured to selectively switch on a circuit loop between a certain resonance module 10 and the oscillation drive module 50. The oscillation drive module 50 is connected to the gating module 40 and configured to transmit an oscillation drive signal to the resonance module 10 selectively switched on by the gating module 40. The voltage processing module 60 is connected to the oscillation drive module 50 and configured to process an output voltage of the oscillation drive module 50 to obtain a voltage processing result.

The control module 70 is connected to the inverter module 30, the voltage processing module 60, the gating module 40, and at least two switch modules 10. The control module 70 is configured to: determine the target resonance module, and control the gating module 40 to selectively switch on a circuit loop between the target resonance module and the oscillation drive module 50; and obtain the voltage processing result output by the voltage processing module 60 to detect whether a pot is placed at a target position corresponding to the target resonance module.

After the oscillation drive signal is transmitted by the oscillation drive module 50 to the target resonance module selectively switched on by the gating module 40, the resonance module forms a Colpitts oscillator circuit with the oscillation drive module 50 under the action of the oscillation drive signal.

On the one hand, an oscillation frequency of the Colpitts oscillator circuit is determined by inductance of a heating coil in the target resonance module and capacitance of the entire circuit, and the inductance of the heating coil in the target resonance module changes depending on whether the pot is placed at the target position. Therefore, by detecting the oscillation frequency of the Colpitts oscillator circuit described above, it can be determined whether the pot is placed at the target position.

On the other hand, equivalent resistance of the heating coil in the Colpitts oscillator circuit changes depending on whether a metallic pot covers the heating coil. As the equivalent resistance of the heating coil changes, amplitude of an oscillation waveform output by the oscillation drive module 50 changes, and a peak voltage signal determined based on the amplitude of the oscillation waveform described above also changes correspondingly. Therefore, based on the peak voltage signal of the oscillation drive module 50, it can be determined whether the pot covers the above-mentioned heating coil.

The above-mentioned pot detection process does not involve the inverter module 30. In a case where a drive pulse signal is transmitted by the inverter module 30 to other resonance modules 10 other than the target resonance module, it can also be detected whether the pot is placed at the target position corresponding to the target resonance module. That is, for the electromagnetic heating circuit 100 according to the embodiments of the present disclosure, even when some of the resonance modules 10 in the electromagnetic heating circuit 100 are in a heating state, it can also be detected whether the pot is placed at positions corresponding to other resonance modules 10 that are not in the heating state.

In some embodiments, the electromagnetic heating circuit 100 further comprises an alternating-current power supply module 80 and a rectifier and filter module 90. The alternating-current power supply module 80 is configured to provide an alternating-current power to the electromagnetic heating circuit 100. The rectifier and filter module 90 is configured to convert an alternating-current electrical signal output by the alternating-current power supply module 80 into a direct-current electrical signal, and filter out a highfrequency noise in the direct-current electrical signal to more stably output an electrical signal. The alternating-current power supply module 80 is connected to an input terminal of the rectifier and filter module 90, and an output terminal of the rectifier and filter module 90 is connected to the inverter module 30.

In some possible embodiments, the voltage processing module 60 may comprise a comparison module 601 connected to the oscillation drive module 50. The comparison module 601 is configured to compare the output voltage of the oscillation drive module 50 with a predetermined voltage to obtain a comparison result. The control module 70 is connected to the comparison module 601 and specifically configured to: obtain the comparison result output by the comparison module 601; determine an oscillation parameter of the target resonance module based on the comparison result, in which the oscillation parameter of the target resonance module comprises an oscillation period and/or an oscillation frequency; and detect, based on the oscillation parameter of the target resonance module, whether the pot is placed at the target position corresponding to the target resonance module.

Therefore, in the electromagnetic heating circuit according to the embodiments of the present disclosure, the oscillation drive module, the gating module, and the comparison module are additionally provided in the electromagnetic heating circuit. The oscillation drive module can transmit the oscillation drive signal to the target resonance module selectively switched on by the gating module. The comparison module can convert an analog signal output by the oscillation drive module into a digital signal. The control module can determine the oscillation parameter (the oscillation period or the oscillation frequency) of the target resonance module based on the comparison result output by the comparison module. Then, the pot detection is performed based on the above-mentioned oscillation parameter. The resonance module forms the Colpitts oscillator circuit with the oscillation drive module under the action of the oscillation drive signal. An oscillation parameter of the Colpitts oscillator circuit is determined by the inductance of the heating coil in the target resonance module and the capacitance of the entire circuit, and the inductance of the heating coil in the target resonance module changes depending on whether the pot is placed at the target position. Therefore, by detecting the oscillation parameter of the Colpitts oscillator circuit described above, it can be determined whether the pot is placed at the target position. The above-mentioned pot detection process does not involve the inverter module. In a case where the drive pulse signal is transmitted by the inverter module to the other resonance modules other than the target resonance module, it can also be detected whether the pot is placed at the target position corresponding to the target resonance module. That is, when some of the resonance modules in the electromagnetic heating circuit are in the heating state, it can also be detected whether the pot is placed at the positions corresponding to the other resonance modules that are not in the heating state.

Specifically, the comparison module 601 may have one or more combinations of a plurality of features of the comparison module 601 provided in any one of the above-mentioned embodiments. Reference may be made to the relevant descriptions in the foregoing embodiments for its specific implementation, and details thereof are omitted herein.

In some other possible embodiments, the voltage processing module 60 may comprise a voltage signal extraction module 603 connected to the oscillation drive module 50. The voltage signal extraction module 603 is configured to output a peak voltage signal of the oscillation drive module 50 based on amplitude of the output signal of the oscillation drive module 50.

The control module 70 is connected to the voltage signal extraction module 603. The control module 70 is specifically configured to: obtain an output result of the voltage signal extraction module 603, in which the output result is the peak voltage signal of the oscillation drive module; and detect, based on the peak voltage signal of the oscillation drive module, whether the pot is placed at the target position corresponding to the target resonance module.

Therefore, in the electromagnetic heating circuit according to the embodiments of the present disclosure, the oscillation drive module, the gating module, and the voltage signal extraction module are additionally provided in the electromagnetic heating circuit. The oscillation drive module can transmit the oscillation drive signal to the target resonance module selectively switched on by the gating module. The voltage signal extraction module can output the peak voltage signal of the oscillation drive module based on the amplitude of the output signal of the oscillation drive module. The control module can detect, based on the peak voltage signal of the oscillation drive module, whether the pot is placed at the target position. The resonance module forms the Colpitts oscillator circuit with the oscillation drive module under the action of the oscillation drive signal, and the equivalent resistance of the heating coil in the Colpitts oscillator circuit changes depending on whether the pot is placed at the target position. As the equivalent resistance of the heating coil changes, the amplitude of the oscillation waveform output by the oscillation drive module changes correspondingly, and the peak voltage signal determined based on the amplitude of the output signal of the oscillation drive module also changes correspondingly. Therefore, the pot detection can be performed based on the above-mentioned peak voltage signal. The above-mentioned pot detection process does not involve the inverter module. In a case where the drive pulse signal is transmitted by the inverter module to the other resonance modules other than the target resonance module, it can also be detected whether the pot is placed at the target position corresponding to the target resonance module. That is, when some of the resonance modules in the electromagnetic heating circuit are in the heating state, it can also be detected whether the pot is placed at the positions corresponding to the other resonance modules that are not in the heating state.

Specifically, the voltage signal extraction module 603 may have one or more combinations of a plurality of features of the voltage signal extraction module 603 provided in any one of the above-mentioned embodiments. Reference may be made to the relevant descriptions in the foregoing embodiments for its specific implementation, and details thereof are omitted herein.

It should be noted herein that the features of the resonance module 10, the switch module 20, the inverter module 30, the gating module 40, the oscillation drive module 50, and the control module 70 described in the above-mentioned embodiments can be combined into this embodiment without conflict. For brevity, details thereof are omitted herein.

Referring to FIG. 20, FIG. 20 shows that an embodiment of the present disclosure also provides a computer-readable storage medium 2000. The computer-readable storage medium 2000 has computer program instructions 2010 stored therein. The computer program instructions 2010 are configured to be invoked by a processor to perform the method described in the above-mentioned embodiments.

The computer-readable storage medium 2000 may be an electronic memory such as a flash memory, an Electrically Erasable Programmable Read-Only Memory (EEPROM), an Erasable Programmable Read-Only Memory (EPROM), a hard disk, or a Read-Only Memory (ROM). Optionally, the computer-readable storage medium 1000 comprises a non-transitory computer-readable storage medium. The computer-readable storage medium 2000 has a storage space for the computer program instructions 2010 that perform any one of the method steps in the above-mentioned methods. The computer program instructions 2010 may be read from one or more computer program products or written to the one or more computer program products. The computer program instructions 2010 may be compressed in a suitable form.

The above-mentioned embodiments are merely preferred examples of the present disclosure and do not limit the present disclosure in any form. Although the present disclosure has disclosed the above with preferred embodiments, they are not intended to limit the present disclosure. Any person skilled in the art may, without departing from the scope of the technical solutions of the present disclosure, make slight alterations or modifications using the technical contents disclosed above to form equivalent embodiments with equivalent changes. Any simple modifications, equivalent changes and modifications made to the above-mentioned embodiments in accordance with the technical essence of the present disclosure without departing from the content of the technical solution of the present disclosure shall still fall within the scope of the technical solution of the present disclosure.

**Claims**

1. An electromagnetic heating circuit, comprising:

    at least two resonance modules;
    at least two switch modules, wherein the at least two switch modules comprises a fixed terminal, a movable terminal, a first position terminal, and a second position terminal, and wherein the at least two switch modules are in one-to-one correspondence with the at least two resonance modules, the fixed terminal of each of the at least two switch modules being connected to a corresponding one of the at least two resonance modules;
    an inverter module connected to the first position terminal;
    a gating module connected to the second position terminal;
    an oscillation drive module connected to the gating module and configured to transmit an oscillation drive signal to a target resonance module among the at least two resonance modules;
    a voltage processing module connected to the oscillation drive module and configured to process an output voltage of the oscillation drive module to obtain a voltage processing result; and
    a control module connected to the inverter module, the voltage processing module, the gating module, and the at least two switch modules, wherein the control module is configured to: determine the target resonance module, and control the gating module to selectively switch on a circuit loop between the target resonance module and the oscillation drive module; and obtain the voltage processing result output by the voltage processing module to detect whether a pot is placed at a target position corresponding to the target resonance module.

2. The electromagnetic heating circuit according to claim 1, wherein:

   the voltage processing module comprises a comparison module connected to the oscillation drive module, the comparison module being configured to compare the output voltage of the oscillation drive module with a predetermined voltage to obtain a comparison result;
   the control module is connected to the comparison module and configured to: obtain the comparison result output by the comparison module; determine an oscillation parameter of the target resonance module based on the comparison result, the oscillation parameter of the target resonance module comprising an oscillation period and/or an oscillation frequency; and detect, based on the oscillation parameter of the target resonance module, whether the pot is placed at the target position corresponding to the target resonance module.

3. The circuit according to claim 2, wherein the comparison module comprises a first capacitor, a first resistor, a second resistor, a third resistor, a fourth resistor, and a comparator, wherein:

   a terminal of the first capacitor is connected to the oscillation drive module;
   the first resistor and the second resistor are connected in series to each other to form a first series branch, an end of the first series branch being connected to a first predetermined power supply, and an other end of the first series branch being grounded; and a common terminal of the first resistor and the second resistor is connected to an other terminal of the first capacitor and to a positive input terminal of the comparator;
   the third resistor and the fourth resistor are connected in series to each other to form a second series branch, an end of the second series branch being connected to the first predetermined power supply, and a second end of the second series branch being grounded; and a common terminal of the third resistor and the fourth resistor is connected to a negative input terminal of the comparator; and
   an output terminal of the comparator is connected to the control module.

4. The electromagnetic heating circuit according to claim 1, wherein:

   the voltage processing module comprises a voltage signal extraction module connected to the oscillation drive module, the voltage signal extraction module being configured to output a peak voltage signal of the oscillation drive module based on amplitude of an output signal of the oscillation drive module; and
   the control module is connected to the voltage signal extraction module and configured to: obtain an output result of the voltage signal extraction module, the output result being the peak voltage signal of the oscillation drive module; and detect, based on the peak voltage signal of the oscillation drive module, whether the pot is placed at the target position corresponding to the target resonance module.

5. The circuit according to claim 4, wherein the voltage signal extraction module comprises a diode, a fifth capacitor, and a ninth resistor, wherein:

   an anode of the diode is connected to the oscillation drive module; and
   the fifth capacitor and the ninth resistor are connected in parallel to each other to form a parallel branch, an end of the parallel branch being grounded, and an other end of the parallel branch being connected to a cathode of the diode and to the control module.

6. The electromagnetic heating circuit according to any one of claims 1 to 5, wherein the oscillation drive module comprises a fifth resistor, a sixth resistor, a seventh resistor, an eighth resistor, a transistor, a second capacitor, a third capacitor, and a fourth capacitor, wherein:

   the fifth resistor and the sixth resistor are connected in series to each other to form a third series branch, an end of the third series branch being connected to a second predetermined power supply, and an other end of the third series branch being grounded; and a common terminal of the fifth resistor and the sixth resistor is connected to a base of the transistor;
   a terminal of the seventh resistor is connected to the second predetermined power supply, and an other terminal of the seventh resistor is connected to a collector of the transistor;
   a terminal of the eighth resistor is connected to an emitter of the transistor, and an other terminal of the eighth resistor is grounded;
   a terminal of the second capacitor is connected to the base of the transistor, and an other terminal of the second capacitor is grounded; and
   the third capacitor and the fourth capacitor are connected in series to each other to form a fourth series branch, an end of the fourth series branch being connected to the collector of the transistor and to the comparison module, and an other end of the fourth series branch being grounded; and a common terminal of the third capacitor and the fourth capacitor is connected to the emitter of the transistor.

7. The circuit according to any one of claims 1 to 6, wherein the gating module comprises:

a selection control terminal connected to the control module;
at least two selection terminals **in** one-to-one correspondence with the at least two switch modules, each of the at least two selection terminals being connected to the second position terminal of a corresponding one of the at least two switch modules; and
a common terminal connected to the oscillation drive module.

8. An electromagnetic heating circuit, comprising:

at least two resonance modules;
at least two switch modules, wherein the at least two switch modules comprises a fixed terminal, a movable terminal, a first position terminal, and a second position terminal, and wherein the at least two switch modules are in one-to-one correspondence with the at least two resonance modules, the fixed terminal of each of the at least two switch modules being connected to a corresponding one of the at least two resonance modules;
an inverter module connected to the first position terminal;
a gating module connected to the second position terminal;
an oscillation drive module connected to the gating module and configured to transmit an oscillation drive signal to a target resonance module among the at least two resonance modules;
a comparison module connected to the oscillation drive module and configured to compare an output voltage of the oscillation drive module with a predetermined voltage to obtain a comparison result; and
a control module connected to the inverter module, the comparison module, the gating module, and the at least two switch modules, wherein the control module is configured to: control a movable terminal of a first switch module among the at least two switch modules to be in contact with the second position terminal; determine the target resonance module among the resonance modules (10) connected to the first switch module (20), and control the gating module to selectively switch on a circuit loop between the target resonance module and the oscillation drive module; obtain the comparison result output by the comparison module; determine an oscillation parameter of the target resonance module based on the comparison result, the oscillation parameter of the target resonance module comprising an oscillation period and/or an oscillation frequency; and detect, based on the oscillation parameter of the target resonance module, whether a pot is placed at a target position corresponding to the target resonance module.

9. The electromagnetic heating circuit according to claim 8, wherein the comparison module comprises a first capacitor, a first resistor, a second resistor, a third resistor, a fourth resistor, and a comparator, wherein:

a terminal of the first capacitor is connected to the oscillation drive module;
the first resistor and the second resistor are connected in series to each other to form a first series branch, an end of the first series branch being connected to a first predetermined power supply, and an other end of the first series branch being grounded; and a common terminal of the first resistor and the second resistor is connected to an other terminal of the first capacitor and to a positive input terminal of the comparator;
the third resistor and the fourth resistor are connected in series to each other to form a second series branch, an end of the second series branch being connected to the first predetermined power supply, and a second end of the second series branch being grounded; and a common terminal of the third resistor and the fourth resistor is connected to a negative input terminal of the comparator; and
an output terminal of the comparator is connected to the control module.

10. The circuit according to claim 8 or 9, wherein the oscillation drive module comprises a fifth resistor, a sixth resistor, a seventh resistor, an eighth resistor, a transistor, a second capacitor, a third capacitor, and a fourth capacitor, wherein:

the fifth resistor and the sixth resistor are connected in series to each other to form a third series branch, an end of the third series branch being connected to a second predetermined power supply, and an other end of the third series branch being grounded; and a common terminal of the fifth resistor and the sixth resistor is connected to a base of the transistor;
a terminal of the seventh resistor is connected to the second predetermined power supply, and an other terminal of the seventh resistor is connected to a collector of the transistor;

a terminal of the eighth resistor is connected to an emitter of the transistor, and an other terminal of the eighth resistor is grounded;

a terminal of the second capacitor is connected to the base of the transistor, and an other terminal of the second capacitor is grounded; and

the third capacitor and the fourth capacitor are connected in series to each other to form a fourth series branch, an end of the fourth series branch being connected to the collector of the transistor and to the comparison module, and an other end of the fourth series branch being grounded; and a common terminal of the third capacitor and the fourth capacitor is connected to the emitter of the transistor.

11. The circuit according to any one of claims 8 to 10, wherein the gating module comprises:

a selection control terminal connected to the control module;

at least two selection terminals in one-to-one correspondence with the at least two switch modules, each of the at least two selection terminals being connected to the second position terminal of a corresponding one of the at least two switch modules; and

a common terminal connected to the oscillation drive module.

12. A control method for an electric device, the electric device comprising an electromagnetic heating circuit according to any one of claims 8 to 11, and the method comprising:

controlling a movable terminal of a first switch module among at least two switch modules to be in contact with a second position terminal;

determining a target resonance module among resonance modules connected to the first switch module, and controlling a gating module to selectively switch on a circuit loop between the target resonance module and an oscillation drive module, the oscillation drive module being configured to transmit an oscillation drive signal to the target resonance module;

obtaining a comparison result output by a comparison module;

determining an oscillation parameter of the target resonance module based on the comparison result, the oscillation parameter of the target resonance module comprising an oscillation period and/or an oscillation frequency;

detecting, based on the oscillation parameter of the target resonance module, whether a pot is placed at a target position corresponding to the target resonance module.

13. The method according to claim 12, wherein when the oscillation parameter of the target resonance module comprises the oscillation period:

said determining the oscillation parameter of the target resonance module based on the comparison result comprises:

determining a time interval between two adjacent rising edges in the comparison result as the oscillation period; and

said detecting, based on the oscillation parameter of the target resonance module, whether the pot is placed at the target position corresponding to the target resonance module comprises:

in response to the oscillation period being smaller than a predetermined duration, determining that the pot is placed at the target position; and

in response to the oscillation period being greater than or equal to the predetermined duration, determining that no pot is placed at the target position.

14. The method according to claim 12 or 13, wherein when the oscillation parameter of the target resonance module comprises the oscillation frequency:

said determining the oscillation parameter of the target resonance module based on the comparison result comprises:

determining a time interval between two adjacent rising edges in the comparison result as the oscillation period; and

determining the oscillation frequency based on the oscillation period; and

said detecting, based on the oscillation parameter of the target resonance module, whether the pot is placed at the target position corresponding to the target resonance module comprises:

in response to the oscillation frequency being greater than a predetermined frequency, determining that the pot is placed at the target position;
in response to the oscillation period being smaller than or equal to the predetermined frequency, determining that no pot is placed at the target position.

15. The method according to any one of claims 12 to 14, further comprising, subsequent to said detecting, based on the oscillation parameter of the target resonance module, whether the pot is placed at the target position corresponding to the target resonance module:
in response to determining that the pot is placed at the target position:

controlling a movable terminal of a switch module connected to the target resonance module to be in contact with a first position terminal of the switch module to switch on a circuit loop between the target resonance module and the inverter module; and
controlling the inverter module to transmit a drive pulse signal to the target resonance module.

16. The method according to any one of claims 12 to 15, wherein when a plurality of first switch modules are provided, said determining the target resonance module among the resonance module connected to the first switch module, and controlling the gating module to selectively switch on the circuit loop between the target resonance module and the oscillation drive module comprises:
in accordance with a sequence of serial numbers of selection terminals of the gating module, sequentially determining resonance modules, which are respectively connected to the plurality of first switch modules, as the target resonance module, and controlling the gating module to selectively switch on the circuit loop between the target resonance module and the oscillation drive module.

17. A control apparatus for an electric device, the electric device comprising an electromagnetic heating circuit according to any one of claims 8 to 11, and the apparatus comprising:

a first control module configured to control a movable terminal of a first switch module among at least two switch modules to be in contact with a second position terminal;
a second control module configured to determine a target resonance module among resonance modules connected to the first switch module, and control the gating module to selectively switch on the circuit loop between the target resonance module and the oscillation drive module, the oscillation drive module being configured to transmit the oscillation drive signal to the target resonance module;
a first result obtaining module configured to obtain a comparison result output by a comparison module;
an oscillation parameter determination module configured to determine an oscillation parameter of the target resonance module based on the comparison result, the oscillation parameter of the target resonance module comprising an oscillation period and/or an oscillation frequency; and
a first pot detection module configured to detect, based on the oscillation parameter of the target resonance module, whether a pot is placed at a target position corresponding to the target resonance module.

18. An electric device, comprising an electromagnetic heating circuit according to any one of claims 8 to 11, wherein a control module of the electromagnetic heating circuit comprises:

one or more processors;
a memory; and
one or more programs stored in the memory and configured to be executed by the one or more processors, the one or more programs being configured to perform a method according to any one of claims 12 to 16.

19. An electromagnetic heating circuit, comprising:

at least two resonance modules;
at least two switch modules, wherein the at least two switch modules comprises a fixed terminal, a movable terminal, a first position terminal, and a second position terminal, and wherein the at least two switch modules are in one-to-one correspondence with the at least two resonance modules, the fixed terminal of each of the at least two switch modules being connected to a corresponding one of the at least two resonance modules;

an inverter module connected to the first position terminal;

a gating module connected to the second position terminal;

an oscillation drive module connected to the gating module and configured to transmit an oscillation drive signal to a target resonance module among the at least two resonance modules;

a voltage signal extraction module connected to the oscillation drive module and configured to output a peak voltage signal of the oscillation drive module based on amplitude of an output signal of the oscillation drive module; and

a control module connected to the inverter module, the voltage signal extraction module, the gating module, and the at least two switch modules, wherein the control module is configured to: control a movable terminal of a first switch module among the at least two switch modules to be in contact with the second position terminal; determine the target resonance module among the resonance modules connected to the first switch module, and control the gating module to selectively switch on a circuit loop between the target resonance module and the oscillation drive module; obtain an output result of the voltage signal extraction module, the output result being the peak voltage signal of the oscillation drive module; and detect, based on the peak voltage signal of the oscillation drive module, whether a pot is placed at a target position corresponding to the target resonance module.

20. The electromagnetic heating circuit according to claim 19, wherein the voltage signal extraction module comprises a diode, a fifth capacitor, and a ninth resistor, wherein:

an anode of the diode is connected to the oscillation drive module; and

the fifth capacitor and the ninth resistor are connected in parallel to each other to form a parallel branch, an end of the parallel branch being grounded, and an other end of the parallel branch being connected to a cathode of the diode and the control module.

21. The circuit according to claim 19 or 20, wherein the oscillation drive module comprises a fifth resistor, a sixth resistor, a seventh resistor, an eighth resistor, a transistor, a second capacitor, a third capacitor, and a fourth capacitor, wherein:

the fifth resistor and the sixth resistor are connected in series to each other to form a third series branch, an end of the third series branch being connected to a second predetermined power supply, and an other end of the third series branch being grounded; and a common terminal of the fifth resistor and the sixth resistor is connected to a base of the transistor;

a terminal of the seventh resistor is connected to the second predetermined power supply, and an other terminal of the seventh resistor is connected to a collector of the transistor;

a terminal of the eighth resistor is connected to an emitter of the transistor, and an other terminal of the eighth resistor is grounded;

a terminal of the second capacitor is connected to the base of the transistor, and an other terminal of the second capacitor is grounded; and

the third capacitor and the fourth capacitor are connected in series to each other to form a fourth series branch, an end of the fourth series branch being connected to the collector of the transistor and to the voltage signal extraction module, and an other end of the fourth series branch being grounded; and a common terminal of the third capacitor and the fourth capacitor is connected to the emitter of the transistor.

22. The circuit according to any one of claims 19 to 21, wherein the gating module comprises:

a selection control terminal connected to the control module;

at least two selection terminals in one-to-one correspondence with the at least two switch modules, each of the at least two selection terminals being connected to the second position terminal of a corresponding one of the at least two switch modules; and

a common terminal connected to the oscillation drive module.

23. A control method for an electric device, the electric device comprising an electromagnetic heating circuit according to any one of claims 19 to 22, and the method comprising:

controlling a movable terminal of a first switch module among at least two switch modules to be in contact with a second position terminal;

determining a target resonance module among resonance modules connected to the first switch module, and controlling the gating module to selectively switch on a circuit loop between the target resonance module and an oscillation drive module, the oscillation drive module being configured to transmit the oscillation drive signal to the target resonance module;

obtaining an output result of the voltage signal extraction module, the output result being a peak voltage signal output by the oscillation drive module; and

detecting, based on the peak voltage signal of the oscillation drive module, whether a pot is placed at a target position corresponding to the target resonance module.

24. The method according to claim 23, wherein said detecting, based on the peak voltage signal of the oscillation drive module, whether the pot is placed at the target position corresponding to the target resonance module comprises:

determining a peak voltage of the oscillation drive module based on the peak voltage signal;

in response to the peak voltage of the oscillation drive module being smaller than a predetermined voltage threshold, determining that the pot is placed at the target position; and

in response to the output voltage of the oscillation drive module being greater than or equal to the predetermined voltage threshold, determining that no pot is placed at the target position.

25. The method according to claim 23 or 24, further comprising, subsequent to said detecting, based on the peak voltage signal of the oscillation drive module, whether the pot is placed at the target position corresponding to the target resonance module:

in response to determining that the pot is placed at the target position:

controlling a movable terminal of a switch module connected to the target resonance module to be in contact with a first position terminal of the switch module to switch on a circuit loop between the target resonance module and the inverter module; and

controlling the inverter module to transmit a drive pulse signal to the target resonance module.

26. The method according to any one of claims 23 to 25, wherein when a plurality of first switch modules are provided, said determining the target resonance module among the resonance modules connected to the first switch module, and controlling the gating module to selectively switch on the circuit loop between the target resonance module and the oscillation drive module comprises:

in accordance with a sequence of serial numbers of selection terminals of the gating module, sequentially determining resonance modules, which are respectively connected to the plurality of first switch modules as the target resonance module, and controlling the gating module to selectively switch on the circuit loop between the target resonance module and the oscillation drive module.

27. A control apparatus for an electric device, the electric device comprising an electromagnetic heating circuit according to any one of claims 19 to 22, and the apparatus comprising:

a first control module configured to control a movable terminal of a first switch module among at least two switch modules to be in contact with a second position terminal;

a second control module configured to determine a resonance module among resonance modules connected to the first switch module, and control the gating module to selectively switch on the circuit loop between the target resonance module and the oscillation drive module, the oscillation drive module being configured to transmit the oscillation drive signal to the target resonance module;

a second result obtaining module configured to obtain an output result of the voltage signal extraction module, the output result being the peak voltage signal of the oscillation drive module; and

a second pot detection module configured to detect, based on a peak voltage signal of the oscillation drive module, whether a pot is placed at the target position corresponding to the target resonance module.

28. An electric device, comprising the electromagnetic heating circuit according to any one of claims 19 to 22, wherein the control module of the electromagnetic heating circuit comprises:

one or more processors;

a memory; and

one or more applications stored in the memory and configured to be executed by the one or more processors, the one or more applications being configured to perform the method according to any one of claims 23 to 26.

29. A computer-readable storage medium, having program code stored therein, wherein the program code, when invoked by a processor, performs the method according to any one of claims 12 to 16 and 23 to 26.

100

80 90 220 (230) 220 (230) 20 10

Alternating -current power supply module

Rectifier and filter module

Inverter module

Resonance module

Resonance module

30

240 210 20

240 210

10

70

Control module

Gating module

40

Comparison module

601

Oscillation drive module

50

FIG. 1

FIG. 2

Inductance of
Heating Coil

Distance Between
Metallic Pot and
Heating Coil

FIG. 3

Output voltage of
oscillation drive signal

Curve 2          Curve1

2.5 V

A comparison
result output by
a comparison
module when an
output voltage of
an oscillation
drive signal is
curve 1

T1

Time

(a)

(b)

A comparison
result output by
the comparison
module when
the output
voltage of the
oscillation drive
signal is curve 2

T2

(c)

FIG. 4

500

FIG. 5

Controlling the movable terminal of the first switch module among the at least two switch modules to be in contact with the second position terminal of the first switch module — S601

Determining the target resonance module among resonance modules connected to the first switch module, and controlling the gating module to selectively connect the circuit between the target resonance module and the oscillation drive module — S602

Obtaining the comparison result output by the comparison module — S603

Determining the oscillation parameter of the target resonance module based on the comparison result — S604

Detecting, based on the oscillation parameter of the target resonance module, whether the pot is placed at the target position corresponding to the target resonance module — S605

FIG. 6

S701

Controlling the movable terminal of the first switch module among the at least two switch modules to be in contact with the second position terminal of the first switch module

S702

Determining the target resonance module among the resonance modules connected to the first switch module, and controlling the gating module to selectively connect the circuit between the target resonance module and the oscillation drive module

S703

Obtaining the comparison result output by the comparison module

S704

Determining the oscillation parameter of the target resonance module based on the comparison result

S705

Detecting, based on the oscillation parameter of the target resonance module, whether the pot is placed at the target position corresponding to the target resonance module

S706

In response to determining that the pot is placed at the target position, controlling a movable terminal of a switch module connected to the target resonance module to be in contact with a first position terminal of the switch module to connect a circuit between the target resonance module and the inverter module

S707

Controlling the inverter module to transmit a drive pulse signal to the target resonance module

FIG. 7

810

First control module

820

Second control module

830

First result obtaining module

840

Oscillation parameter
determination module

850

First pot detection module

FIG. 8

900

910

920

Memory ↔ Processor

FIG. 9

100

80

90

220（230）

220（230）

20

10

Alternating-current power supply module

Rectifier and filter module

Inverter module

Resonance module

10

Resonance module

30

20

240

210

240

210

70

Control module

Gating module

40

Voltage signal extraction module

603

Oscillation drive module

50

FIG. 10

FIG. 11

FIG. 12

FIG. 13

FIG. 14

Controlling the movable terminal of the first switch module among the at least two switch modules to be in contact with the second position terminal of the first switch module

S1501

Determining the target resonance module among the resonance modules connected to the first switch module, and controlling the gating module to selectively connect the circuit between the target resonance module and the oscillation drive module

S1502

Obtaining the output result of the voltage signal extraction module

S1503

Detecting, based on the peak voltage signal of the oscillation drive module, whether the pot is placed at the target position corresponding to the target resonance module

S1504

FIG. 15

S1601

Controlling the movable terminal of the first switch module among the at least two switch modules to be in contact with the second position terminal of the first switch module

S1602

Determining the target resonance module among the resonance modules connected to the first switch module, and controlling the gating module to selectively connect the circuit between the target resonance module and the oscillation drive module

S1603

Obtaining the output result of the voltage signal extraction module

S1604

Detecting, based on the peak voltage signal of the oscillation drive module, whether the pot is placed at the target position corresponding to the target resonance module

S1605

In response to determining that the pot is placed at the target position, controlling a movable terminal of a switch module connected to the target resonance module to be in contact with a first position terminal of the switch module to connect a circuit between the target resonance module and the inverter module

S1606

Controlling the inverter module to transmit a drive pulse signal to the target resonance module

FIG. 16

810

First control module

820

Second control module

860

Second result obtaining module

870

Second pot detection module

FIG. 17

1800

1810

1820

Memory

Processor

FIG. 18

100

80
Alternating
-current
power
supply
module

90
Rectifier
and filter
module

Inverter
module

30

220 (230)

240   210

Resonance
module

20

10

220 (230)

240  210

20

Resonance
module

10

70
Control
module

Gating
module

40

60
Voltage
processing
module

Oscillation
drive
module

50

FIG. 19

2000

Computer-readable storage medium

Computer program instruction

2010

FIG. 20

# EP 4 773 456 A1

## INTERNATIONAL SEARCH REPORT

International application No.

**PCT/CN2024/128465**

### A. CLASSIFICATION OF SUBJECT MATTER

H02J3/00(2006.01)i; H05B6/06(2006.01)i

According to International Patent Classification (IPC) or to both national classification and IPC

### B. FIELDS SEARCHED

Minimum documentation searched (classification system followed by classification symbols)

IPC:H02J,H05B

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电磁, 加热, 无线, 谐振, 多头灶, heat+, electromagnet+, wireless, resonan+, multi-head, stove

### C. DOCUMENTS CONSIDERED TO BE RELEVANT

| Category* | Citation of document, with indication, where appropriate, of the relevant passages | Relevant to claim No. |
|---|---|---|
| A | CN 219876177 U (FOSHAN SHUNDE MIDEA ELECTRICAL HEATING APPLIANCES MANUFACTURING CO., LTD.) 20 October 2023 (2023-10-20) description, paragraphs 0025-0056, and figures 1-4 | 1-29 |
| A | CN 104485759 A (HARBIN INSTITUTE OF TECHNOLOGY) 01 April 2015 (2015-04-01) entire document | 1-29 |
| A | CN 114062779 A (ZHEJIANG SHAOXING SUPOR DOMESTIC ELECTRICAL APPLIANCE CO., LTD.) 18 February 2022 (2022-02-18) entire document | 1-29 |
| A | CN 205179403 U (HANGZHOU JOYOUNG ONONDO SMALL HOUSEHOLD APPLIANCES CO., LTD.) 20 April 2016 (2016-04-20) entire document | 1-29 |
| A | JP 2005149915 A (MITSUBISHI ELECTRIC CORP. et al.) 09 June 2005 (2005-06-09) entire document | 1-29 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 February 2025** | **20 February 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/128465**

| Patent document cited in search report | | | Publication date (day/month/year) | Patent family member(s) | | | Publication date (day/month/year) |
|---|---|---|---|---|---|---|---|
| CN | 219876177 | U | 20 October 2023 | None | | | |
| CN | 104485759 | A | 01 April 2015 | None | | | |
| CN | 114062779 | A | 18 February 2022 | None | | | |
| CN | 205179403 | U | 20 April 2016 | None | | | |
| JP | 2005149915 | A | 09 June 2005 | JP | 4036266 | B2 | 23 January 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311440658X
- CN 202311440643